# EUROPÄISCHE PATENTSCHRIFT

(11) **EP 3 074 287 B1**
(45) Veröffentlichungstag und Bekanntmachung des Hinweises auf die Patenterteilung: **23.05.2018**
(21) Anmeldenummer: 14784262.9
(22) Anmeldetag: 17.10.2014
(51) Int. Cl.: B60T 17/22, B60T 8/40

(54) **ELEKTROHYDRAULISCHE KRAFTFAHRZEUG-BREMSANLAGE UND VERFAHREN ZUM ENTLÜFTEN IHRES SIMULATORKREISES; VERFAHREN ZUM ÜBERPRÜFEN DER FUNKTIONSFÄHIGKEIT EINER WEITEREN ELEKTROHYDRAULISCHEN KRAFTFAHRZEUG-BREMSANLAGE UND COMPUTERPROGRAMMPRODUKTE FÜR DIE VERFAHREN**
ELECTROHYDRAULIC MOTOR VEHICLE BRAKE SYSTEM AND METHOD FOR VENTILATION OF THE SIMULATOR CIRCUIT THEREOF; METHOD FOR TESTING THE FUNCTIONALITY OF A FURTHER ELECTROHYDRAULIC MOTOR VEHICLE BRAKE SYSTEM, AND COMPUTER PROGRAM PRODUCTS FOR THE METHODS
SYSTÈME DE FREINAGE ÉLECTROHYDRAULIQUE POUR VÉHICULE AUTOMOBILE ET PROCÉDÉ POUR PURGER SON CIRCUIT SIMULATEUR ; PROCÉDÉ DE VÉRIFICATION DE L'APTITUDE FONCTIONNELLE D'UN AUTRE SYSTÈME DE FREINAGE ÉLECTROHYDRAULIQUE POUR VÉHICULE AUTOMOBILE ET LOGICIEL INFORMATIQUE POUR LE PROCÉDÉ

(30) Priorität: 28.11.2013 DE 102013018072
(43) Veröffentlichungstag der Anmeldung: 05.10.2016
(73) Patentinhaber: Lucas Automotive GmbH, 56070 Koblenz (DE)
(72) Erfinder: ALFORD, Nicholas, 56323 Waldesch (DE)
(74) Vertreter: Röthinger, Rainer
(86) Internationale Anmeldenummer: PCT/EP2014/072306
(87) Internationale Veröffentlichungsnummer: WO 2015/078635

(56) Entgegenhaltungen:
- EP-A2- 0 284 718
- WO-A1-2012/059175
- DE-A1-102011 085 273

## Beschreibung

### Technisches Gebiet

Die vorliebende Offenbarung betrifft allgemein das Gebiet der Bremsanlagen. Konkret wird eine elektrohydraulische Kraftfahrzeug-Bremsanlage beschrieben.

### Hintergrund

Moderne Kraftfahrzeug-Bremsanlagen arbeiten nach dem "Brake-by-Wire"-Prinzip. Das bedeutet, dass ein Hydraulikdruck an den Radbremsen fußkraftunabhängig über einen Hydraulikdruckerzeuger (z.B. eine Kolben-Zylinder-Einrichtung mit einem auf den Kolben einwirkenden elektromechanischen Aktuator) aufgebaut wird. Derartige Bremsanlagen umfassen, neben dem Hydraulikdruckerzeuger, eine Bremspedalschnittstelle mit einer Sensorik zur Detektion einer Betätigung eines Bremspedals, einen mit der Bremspedalschnittstelle gekoppelten Simulatorkreis zur Simulation eines realistischen Pedalrückwirkverhaltens und eine Vielzahl von Ventilen zur Druckregelung. Die Ventile sind dabei häufig in einer blockförmigen hydraulischen Steuereinheit untergebracht. Derartige Bremsanlagen sind beispielsweise aus der WO 2006/111393 A1, der WO 2012/062393 A1 und der WO 2012/152352 A1 bekannt.

Brake-by-Wire-Bremsanlagen bringen mehrere Vorteile. Beispielsweise sind sie in hervorragender Weise zum Einbau von Energierückgewinnungssystemen geeignet. Ferner kann durch derartige Bremsanlagen ein radindividueller Bremsdruckaufbau besser gesteuert und Fahrdynamikregelungsprogramme (ABS-, ASR-, ESP-Programme) besser integriert werden.

Andererseits umfassen Brake-by-Wire-Bremsanlagen eine Vielzahl elektrisch betätigbarer Hydraulikventile, welche in einem komplizierten Geflecht von miteinander gekoppelten Fluidpfaden angeordnet sind. Die Fluidpfade sind wiederum oft nur über ein zentrales Hydraulikfluidreservoir mit Hydraulikfluid versorgt.

Die Wartung derartiger Bremsanlagen ist aufgrund der Vielzahl der Ventile und Fluidleitpfade aufwendig. Dies gilt beispielsweise für die Entlüftung der Bremsanlage, da die Radbremsen, der Simulatorkreis und die hydraulische Steuereinheit separat entlüftet werden müssen. Der Zeitaufwand ist trotz des Einsatzes von Entlüftungsgeräten, wie beispielsweise Überdruckgeräten oder Unterdruckgeräten, entsprechend groß. In gleicher Weise erfordert eine Detektion von defekten Ventilen oder eines Lecks in der Bremsanlage viel Zeit, da im Rahmen der Fehlersuche in der Regel alle Komponenten des Simulatorkreises und der Bremskreise einzeln überprüft werden müssen.

Das Dokument WO 2012/059175 A1 betrifft eine Betätigungsvorrichtung, insbesondere für eine Kraftfahrzeug-Bremsanlage, mit einer Betätigungseinrichtung und einer Mehrzahl von Wegsensoren zur Sensierung des Weges der Betätigungseinrichtung.

Das Dokument DE 10 2011 085 273 A1 betrifft eine Bremsanlage mit einer elektrisch steuerbaren Druckbereitstellungseinrichtung, eine Zylinder-Kolben-Anordnung, deren Kolben mit einem Bremspedal gekoppelt ist, und einen Hauptbremszylinder mit einer hydraulischen Kammer, die von der Druckbereitstellungseinrichtung mit Druck beaufschlagbar ist.

Das Dokument EP 0 284 718 A2 betrifft eine blockiergeschützte hydraulische Bremsanlage, bei der ein tatsächlich auftretender Druck beziehungsweise Durchfluss während eines Überprüfungszyklus einer Bremsanlage von Durchflusssensoren erfasst wird.

### Kurzer Abriss

Aufgabe der Erfindung ist es, eine Fahrzeugbremsanlage, bei der die Überprüfung der Bremsanlage erleichtert wird, und ein Testverfahren zur Überprüfung von Komponenten der Bremsanlage anzugeben.

Diese Aufgabe wird durch die Bremsanlage nach Anspruch 1 und das Verfahren nach Anspruch 11 gelöst.

Gemäß einem ersten Aspekt der Erfindung wird eine elektrohydraulische Kraftfahrzeug-Bremsanlage bereitgestellt, welche umfasst: einen hydraulischen Simualtorkreis zur Erzeugung einer Pedalrückwirkungskraft; eine erste Zylinder-Kolben-Einrichtung und einen auf die erste Zylinder-Kolben-Einrichtung einwirkenden elektromechanischen Aktuator zur Hydraulikdruckerzeugung in wenigstens einem Bremskreis; einen ersten Fluidpfad mit einer darin angeordneten ersten Ventileinrichtung zur wahlweisen fluidischen Kopplung der ersten Zylinder-Kolben-Einrichtung mit dem Simulatorkreis; und einen zweiten Fluidpfad mit einer darin angeordneten zweiten Ventileinrichtung zur wahlweisen fluidischen Kopplung des Simulatorkreises mit einem drucklosen Hydraulikfluidreservoir.

Die Bremsanlage kann wenigstens einen mit der ersten Zylinder-Kolben-Einrichtung fluidisch koppelbaren hydraulischen Bremskreis umfassen. Ferner kann der erste Fluidpfad mit seinem ersten Ende in den Simulatorkreis und mit seinem zweiten Ende in den wenigstens einen Bremskreis einmünden. In diesem Fall wird der Simulatorkreis über den ersten Fluidpfad und den wenigstens einen Bremskreis mit der ersten Zylinder-Kolben-Einrichtung fluidisch gekoppelt. Gemäß einer alternativen Variante kann der erste Fluidpfad auch direkt (d.h. unabhängig von dem wenigstens einen Bremskreis) in die erste Zylinder-Kolben-Einrichtung einmünden. In diesem Fall ist der Simulatorkreis über den ersten Fluidpfad unmittelbar mit der elektromechanisch betätigbaren erste Zylinder-Kolben-Einrichtung fluidisch koppelbar.

Die erste Zylinder-Kolben-Einrichtung und der auf die erste Zylinder-Kolben-Einrichtung einwirkende elektromechanische Aktuator können einen eigenständigen Hydraulikdruckerzeuger bilden, welcher einen Hydraulikdruck in der Bremsanlage fußkraftunabhängig aufbauen kann. Gemäß einer Implementierung kann die erste Zylinder-Kolben-Einrichtung als Hauptbremszylinder der Bremsanlage ausgebildet sein, welche bei Ausfall des Aktuators zusätzlich noch fußkraftbetätigbar ist.
Gemäß einer alternativen Ausgestaltung kann die erste Zylinder-Kolben-Einrichtung zusätzlich zu einem Hauptbremszylinder der Bremsanlage zur fußkraftunabhängigen Hydraulikdruckerzeugung in der Bremsanlage vorgesehen sein.

Gemäß einer weiteren Ausgestaltung kann die erste Zylinder-Kolben-Einrichtung mit einer zweiten Zylinder-Kolben-Einrichtung der Bremsanlage fluidisch gekoppelt sein, um einen Hydraulikdruck an den Radbremsen der Bremsanlage aufzubauen. In diesem Fall kann die erste Zylinder-Kolben-Einrichtung dazu vorgesehen sein, einen Hydraulikdruck für eine hydraulische Betätigung eines Kolbens der zweiten Zylinder-Kolben-Einrichtung bereitzustellen. Durch die hydraulische Betätigung des Kolbens der zweiten Zylinder-Kolben-Einrichtung wird dann ein Hydraulikdruck an den Radbremsen aufgebaut. Die zweite Zylinder-Kolben-Einrichtung kann beispielsweise als Hauptbremszylinder der Bremsanlage ausgebildet sein.

Die erste Ventileinrichtung kann parallel zur zweiten Ventileinrichtung angeordnet sein. Entsprechend können auch der erste Fluidpfad und der zweite Fluidpfad voneinander verschieden ausgebildet sein. Konkret kann der erste Fluidpfad mit seinem ersten Ende in den Simulatorkreis und mit seinem zweiten Ende in den wenigstens einen Bremskreis oder direkt in die erste Zylinder-Kolben-Einrichtung münden. Entsprechend kann der zweite Fluidpfad mit seinem ersten Ende in das drucklose Hydraulikfluidreservoir und mit seinem zweiten Ende in den Simulatorkreis münden. Der erste Hydraulikpfad und der zweite Hydraulikpfad können somit über den Simulatorkreis fluidisch gekoppelt werden. Der erste Fluidpfad, der Simulatorkreis und der zweite Fluidpfad können zusammen einen Fluidkreis der Bremsanlage bilden, welcher je nach Schaltung der ersten Ventileinrichtung und der zweiten Ventileinrichtung eine fluidische Kopplung der ersten Zylinder-Kolben-Einrichtung mit dem Simulatorkreis und/oder mit dem drucklosen Hydraulikfluidreservoir ermöglicht. Der Fluidkreis kann bei geeigneter Ansteuerung der ersten Ventileinrichtung, der zweiten Ventileinrichtung und des Aktuators zum Entlüften der Bremseinlage eingesetzt werden. Der Fluidkreis kann aber auch zum Testen von Bremsanlagen-Komponenten eingesetzt werden, wie nachfolgend ausführlicher beschrieben wird.

Der Simulatorkreis kann einen Hydraulikdruckspeicher umfassen, welcher mit einer Bremspedalschnittstelle fluidisch gekoppelt ist. Der Hydraulikdruckspeicher kann hierbei über einen Fluidpfad mit der Pedalschnittstelle fluidisch gekoppelt sein. Der Hydraulikdruckspeicher kann als federkraft-beaufschlagter Druckbehälter in Form einer Kolben-Zylinder-Anordnung realisiert sein, wobei der im Zylinder verschiebbar aufgenommene Kolben durch eine Feder vorgespannt ist.

Die erste Ventileinrichtung kann dazu ausgebildet sein, sich im unbetätigten Zustand in einem geschlossenen Zustand zu befinden. Mit anderen Worten kann die erste Ventileinrichtung im unbetätigten Zustand den ersten Fluidpfad sperren. Der Simulatorkreis kann somit von der ersten Zylinder-Kolben-Einrichtung fluidisch entkoppelt sein. Die erste Ventileinrichtung kann elektrisch betätigbar sein. Durch elektrische Ansteuerung kann dann die erste Ventileinrichtung von einem geschlossenen in einen geöffneten Zustand geschaltet werden. Die Ventileinrichtung kann ein oder mehrere elektrisch betätigbare Ventile umfassen.

Die zweite Ventileinrichtung kann dazu ausgebildet sein, sich im unbetätigten Zustand in einem geöffneten Zustand zu befinden. Die zweite Ventileinrichtung kann im unbetätigten Zustand eine offene Ventilstellung einnehmen, womit der Simulatorkreis mit dem Hydraulikfluidreservoir fluidisch gekoppelt ist. Die zweite Ventileinrichtung kann wenigstens ein elektrisch betätigbares Ventil umfassen. Durch elektrische Ansteuerung des wenigstens einen Ventils der zweiten Ventileinrichtung kann die zweite Ventileinrichtung in einen geschlossenen Zustand geschaltet werden. Auf diese Weise kann der Simulatorkreis vom Hydraulikfluidreservoir fluidisch entkoppelt werden.

Die elektrohydraulische Bremsanlage kann ferner ein elektrisches Steuergerät oder ein Steuergerätesystem zum elektrischen Ansteuern der ersten Ventileinrichtung und zum elektrischen Ansteuern des elektromechanischen Aktuators umfassen. Das Steuergerät oder Steuergerätesystem kann dazu ausgebildet ist, die folgenden Betätigungsschritte (durch elektrische Ansteuerung) durchzuführen: Schalten der ersten Ventileinrichtung von einem geschlossenen Zustand in einen geöffneten Zustand, um den Simulatorkreis mit dem wenigstens einen Bremskreis fluidisch zu koppeln; und Betätigen des elektromechanischen Aktuators, um Hydraulikfluid aus der Zylinder-Kolben-Einrichtung über den ersten Fluidpfad in den Simulatorkreis zu verschieben.

Das Steuergerät oder das Steuergerätesystem kann ferner zur elektrischen Ansteuern der zweiten Ventileinrichtung ausgelegt sein. Das Steuergerät kann dazu ausgelegt sein, durch elektrische Ansteuerung die zweite Ventileinrichtung von einem geöffneten Zustand in einen geschlossenen Zustand zu schalten, bevor Hydraulikfluid in den Simulatorkreis verschoben wird. Somit kann das über den ersten Fluidpfad und die erste Ventileinrichtung in den Simulatorkreis verschobene Hydraulikfluid nicht über den zweiten Fluidpfad und die darin angeordnete Ventileinrichtung in das Hydraulikfluidreservoir abfließen. Vielmehr wird das durch den Aktuator verschobene Fluidvolumen im Hydraulikdruckspeicher des Simulatorkreises gespeichert.

Das Steuergerät oder Steuergerätesystem kann ferner dazu ausgebildet sein, die zweite Ventileinrichtung nach Verschiebung eines vorgegebenen Hydraulikfluidvolumens in den Simulatorkreis durch elektrische Ansteuerung wieder in einen geöffneten Zustand zu schalten. Auf diese Weise kann das im Hydraulikdruckspeicher des Simulatorkreises zwischengespeicherte Fluidvolumen über den zweiten Fluidpfad und die darin angeordnete zweite Ventileinrichtung in das Hydraulikfluidreservoir abfließen. Die Geschwindigkeit, mit der die zweite Ventileinrichtung das im Hydraulikdruckspeicher gespeicherte Hydraulikfluidvolumen über den zweiten Fluidpfad abströmen lässt, kann für die Bestimmung von Strömungseigenschaften der zweiten Ventileinrichtung herangezogen werden.

Alternativ zur oben genannten Schließung der zweiten Ventileinrichtung, kann die zweite Ventileinrichtung während der Betätigung des elektromechanischen Aktuators in einem geöffneten Zustand geschaltet bleiben. Sollte sich die zweite Ventileinrichtung bei Betätigung des elektromechanischen Aktuators zunächst in einer geschlossenen Ventilstellung befinden, so kann das Steuergerät die zweite Ventileinrichtung in eine geöffnete Stellung schalten. Somit kann aus der ersten Zylinder-Kolben-Einrichtung gefördertes Hydraulikfluid zunächst über den ersten Fluidpfad in den Simulatorkreis gelangen. Von dort kann das geförderte Hydraulikfluid über den zweiten Fluidpfad in das Hydraulikfluidreservoir abgeleitet werden. Auf diese Weise kann der Simulatorkreis und die mit dem Simulatorkreis fluidisch gekoppelte Pedalschnittstelle fahrerunabhängig entlüftet werden. Die Förderung von Hydraulikfluid über den ersten Fluidpfad in den Simulatorkreis und von dort über den zweiten Fluidpfad zurück in das Hydraulikfluidreservoir kann auch zum Testen von der zweiten Ventileinrichtung stromabwärts nachgeschalteten weiteren Ventilen herangezogen werden.

Die elektrohydraulische Bremsanlage umfasst erfindungsgemäß ferner wenigstens eine erste Erfassungseinrichtung. Die wenigstens eine erste Erfassungseinrichtung ist dazu ausgebildet, ein während der Betätigung des elektromechanischen Aktuators im Bremskreis und/oder im Simulatorkreis aufgebauten Hydraulikdruck zu erfassen. Die Erfassungseinrichtung kann wenigstens einen Drucksensor umfassen, der den Druck im Bremskreis und/oder im Simulatorkreis während der Förderung des Hydraulikfluids erfasst. Zusätzlich oder alternativ hierzu kann die erste

Erfassungseinrichtung einen Sensor umfassen, welcher eine auf einen Druck hinweisende Messgröße erfasst (indirekte Druckmessung).

Die elektrohydraulische Bremsanlage umfasst erfindungsgemäß ferner wenigstens eine zweite Erfassungseinrichtung, welche dazu ausgebildet ist, ein aufgrund einer Betätigung des elektromechanischen Aktuators aus der ersten Zylinder-Kolben-Einrichtung verschobenes Hydraulikfluidvolumen zu erfassen. Die zweite Erfassungseinrichtung kann hierbei einen Aktuatorparameter erfassen, welcher auf eine Aktuatorbetätigung und somit auf eine Betätigung des Kolbens, auf welchen der Aktuator einwirkt, hindeutet. Aus der erfassten Kolbenbetätigung und einem Radius der Zylinderkammer der ersten Zylinder-Kolben-Einrichtung kann in bekannter Weise das geförderte Fluidvolumen ermittelt werden.

Die elektrohydraulische Bremsanlage umfasst erfindungsgemäß ferner eine Vergleichseinrichtung, welche dazu ausgebildet ist, den erfassten Hydraulikdruck und das erfasste geförderte Fluidvolumen mit einer vorgegebenen Druck-Volumen-Charakteristik zu vergleichen. Die vorgegeben Druck-Volumen-Charakteristik kann den zu erwarteten Druckanstieg in Abhängigkeit des verschobenen Fluidvolumens eines entlüfteten und voll funktionsfähigen Simulatorkreises abbilden. Durch Vergleich der gemessenen Druck-Volumen-Charakteristik mit der hinterlegten Druck-Volumen-Charakteristik kann das Kraftrückwirkverhalten des Hydraulikdruckspeichers im Simulatorkreis getestet werden. Insbesondere kann aus dem Vergleich der erfassten Druck-Volumen-Charakteristik mit einer hinterlegten Druck-Volumen-Charakteristik das Entlüftungsniveau des Simulatorkreises bestimmt werden. Die vorgegebene Druck-Volumen-Charakteristik kann in einem Speicher der Vergleichseinrichtung hinterlegt sein. Insbesondere kann die Vergleichseinrichtung in Form eines Softwaremoduls in dem Steuergerät integriert sein.

Die elektrohydraulische Bremsanlage kann ferner wenigstens eine in dem wenigstens einen Bremskreis angeordnete dritte Ventileinrichtung zur wahlweisen fluidischen Verbindung einer Radbremse mit der ersten Zylinder-Kolben-Einrichtung oder der zweiten Zylinder-Kolben-Einrichtung umfassen. Die wenigstens eine dritte Ventileinrichtung kann über das Steuergerät elektrisch betätigt werden, um so jede Radbremse der Bremsanlage je nach Bedarf mit der ersten Zylinder-Kolben-Einrichtung oder der zweiten Zylinder-Kolben-Einrichtung fluidisch zu koppeln oder zu entkoppeln. Beispielsweise kann das Steuergerät oder Steuergerätsystem die dritte Ventileinrichtung im Bremsbetrieb der Bremsanlage derart ansteuern (z.B. Ansteuerung nach einem Zeitmulitplexverfahren), dass ein ganz bestimmter Hydraulikdruck an den Radbremsen der Bremsanlage einstellbar ist.

Das Steuergerät oder Steuergerätsystem kann die dritte Ventileinrichtung aber auch im Rahmen von Testverfahren für die Bremsanlage oder im Rahmen von automatischen Bremsanlagen-Entlüftungsverfahren ansteuern, um bei Bedarf die Radbremsen von der ersten Zylinder-Kolben-Einrichtung oder, bei serieller Anordnung von erster und zweiter Zylinder-Kolben-Einrichtung, von der zweiten Zylinder-Kolben-Einrichtung entweder fluidisch zu entkoppeln oder fluidisch zu koppeln. Beispielsweise kann das Steuergerät oder Steuergerätsystem dazu ausgebildet sein, vor Betätigung des elektromechanischen Aktuators im Rahmen eines Bremsanlagen-Testverfahrens oder eines Entlüftungsverfahrens die wenigstens eine dritte Ventileinrichtung von einem geöffneten Zustand in einen geschlossenen Zustand zu schalten. Auf diese Weise kann sichergestellt werden, dass das aus dem Hydraulikdruckerzeuger geförderte Hydraulikfluid während einer Testfunktion der Bremsanlage nicht an die Radbremsen gelangt. Das aus der ersten Zylinder-Kolben-Einrichtung geförderte Hydraulikfluid kann somit bei geschlossener dritter Ventileinrichtung und geöffneter erster Ventileinrichtung direkt in den Simulatorkreis gefördert werden. Alternativ hierzu kann im Rahmen eines Entlüftungsverfahrens die dritte Ventileinrichtung auch in einem geöffneten Zustand bleiben. Befindet sich die dritte Ventileinrichtung vorher in einem geschlossenen Zustand, so kann sie durch das Steuergerät in einen geöffneten Zustand geschaltet werden.

Gemäß einem zweiten Aspekt der Erfindung wird ein Verfahren zum Überprüfen einer Funktionsfähigkeit einer elektrohydraulischen Fahrzeug-Bremsanlage bereitgestellt. Die elektrohydraulische Fahrzeug-Bremsanlage umfasst einen hydraulischen Simulatorkreis zur Erzeugung einer Pedalrückwirkungskraft, eine erste Zylinder-Kolben-Einrichtung und einen mit der ersten Zylinder-Kolben-Einrichtung zusammenwirkenden elektromechanischen Aktuator zur Erzeugung eines Hydraulikdrucks in wenigstens einem hydraulischen Bremskreis und einen ersten Fluidpfad mit einer darin angeordneten ersten Ventileinrichtung zum wahlweisen fluidischen Koppeln der ersten Zylinder-Kolben-Einrichtung mit dem hydraulischen Simulatorkreis. Das Verfahren umfasst die Schritte des Schaltens der ersten Ventileinrichtung von einem geschlossenen Zustand in einen geöffneten Zustand, um den hydraulischen Simulatorkreis mit der ersten Zylinder-Kolben-Einrichtung fluidisch zu koppeln, des Betätigens des elektromechanischen Aktuators, um Hydraulikfluid aus der ersten Zylinder-Kolben-Einrichtung über den ersten Hydraulikfluidpfad in den Simulatorkreis zu verschieben, des Erfassens eines aufgrund des verschobenen Hydraulikfluids herrschenden Hydraulikdrucks, und des Überprüfens der Funktionsfähigkeit der elektrohydraulischen Kraftfahrzeug-Bremsanlage auf Basis des erfassten Hydraulikdrucks.

Der erzeugte Hydraulikdruck kann hierbei in der ersten Zylinder-Kolben-Einrichtung und/oder im Bremskreis und/oder im Simulatorkreis erfasst werden. Der Hydraulikdruck kann während der Betätigung des Aktuators erfasst werden, um beispielsweise einen Druckaufbau im Bremskreis oder Simulatorkreis zu erfassen. Zusätzlich kann der Druck auch noch dann erfasst werden, wenn die Betätigung des Aktuators (vorübergehend) gestoppt wird und der Kolben sich in einer vorgefahrenen Position im Zylinder befindet. Auf diese Weise kann der durch die Betätigung des Kolbens erzeugte Druck sowie mögliche zeitliche Druckänderungen (z.B. ein zeitlicher Druckabfall aufgrund eines Lecks im Simulatorkreis) erfasst werden. Der Druck kann kontinuierlich oder in vorgegebenen Zeitintervallen (z.B. in Zeitabständen von 0.1 Sekunden) erfasst werden.

Das Verfahren umfasst erfindungsgemäß ferner den Schritt des Erfassens des während der Betätigung des Aktuators verschobenen Hydraulikfluidvolumens. Die Erfassung des geförderten Hydraulikfluidvolumens kann, wie die Druckerfassung, kontinuierlich oder in vorgegebenen Zeitintervallen (z.B. in Zeitabständen von 0.1 Sekunden) erfolgen. Ferner kann die Erfassung des Hydraulikfluidvolumens im Wesentlichen synchron zur Druckerfassung erfolgen. Auf diese Weise ist es möglich während einer Kolbenbetätigung eine Folge von im Wesentlichen zeitgleich aufgenommenen Druckwerten und Fluidvolumenwerten zu erhalten.

Der Schritt des Überprüfens umfasst erfindungsgemäß ferner ein Vergleichen des erfassten Hydraulikdrucks und des erfassten Hydraulikfluidvolumens mit einer vorgegebenen Druck-Volumen-Charakteristik. Die vorgegebene Druck-Volumen-Charakteristik Aus den im Wesentlichen zeitgleich erfassten Druckwerten und Fluidvolumenwerten kann eine eineindeutige Druck-Volumen-Beziehung abgeleitet werden. Diese erfasste funktionelle Beziehung zwischen Druck und gefördertem Volumen kann mit der hinterlegten Charakteristik verglichen werden. Auf diese Weise kann festgestellt werden, ob Abweichungen zwischen der gemessenen Druck-Volumen-Charakteristik und der vorgegebenen Druck-Volumen-Charakteristik auftreten. Aus den erfassten Abweichungen zwischen der gemessenen Druck-Volumen-Charakteristik und der vorgegebenen Druck-Volumen-Charakteristik können Rückschlüsse über den Entlüftungsgrad oder den Verschleiß des Simulatorkreises gezogen werden.

Die Fahrzeug-Bremsanlage kann ferner einen zweiten Hydraulikfluidpfad mit einer darin angeordneten zweiten Ventileinrichtung zum wahlweisen fluidischen Koppeln des Simulatorkreises mit einem drucklosen Hydraulikfluidreservoir umfassen. Die zweite Ventileinrichtung kann eine elektrisch betätigbare Ventileinrichtung sein. Sie kann unbetätigt (d.h. unbestromt) eine geöffnete Ventilstellung und im bestromten Zustand eine geschlossene Ventilstellung einnehmen. In diesem Fall kann das Verfahren zusätzlich den Schritt des Schaltens der zweiten Ventileinrichtung von einem geöffneten Zustand in den geschlossenen Zustand umfassen, bevor Hydraulikfluid in den Simulatorkreis verschoben worden ist, um das verschobene Hydraulikfluid im Simulatorkreis aufzustauen. Auf diese Weise wird das aus der Zylinder-Kolben-Einrichtung geförderte Hydraulikfluid zunächst in einem Hydraulikdruckspeicher des Simulatorkreises gespeichert. Der dabei erzeugte Druck kann in Abhängigkeit des verschobenen Hydraulikfluidvolumens erfasst werden und für die Überprüfung des Simulatorkreises herangezogen werden, wie bereits oben beschrieben wurde.

Ferner kann das Verfahren den Schritt des Öffnens der zweiten Ventileinrichtung umfassen, nachdem ein Hydraulikfluidvolumen in den Simulatorkreis verschoben worden ist. Das aufgestaute Hydraulikfluid im Simulatorkreis kann dann über den zweiten Fluidpfad und die zweite Ventileinrichtung in das Hydraulikfluidreservoir abfließen. Die (zeitliche) Abnahme des Druckes im Simulatorkreis und in dem wenigstens einen Bremskreis (oder im Zylinder des Druckerzeugers) kann erfasst werden. Auf Grundlage der erfassten zeitlichen Abnahme des Hydraulikdrucks können die Strömungseigenschaft der zweiten Ventileinrichtung (und des zweiten Fluidpfads) getestet werden.

Die Fahrzeug-Bremsanlage kann ferner einen zweiten Hydraulikfluidpfad mit einer darin angeordneten zweiten Ventileinrichtung zum wahlweisen fluidischen Koppeln des Simulatorkreises mit einem Hydraulikfluidreservoir umfassen, wobei bei der zweiten Ventileinrichtung eine druckgesteuerte Ventileinrichtung nachgeschaltet ist. Um beispielsweise einen Schaltdruck des druckgesteuerten Ventileinrichtung zu bestimmen, kann das Verfahren gemäß einer Testvariante vorsehen, dass die zweite Ventileinrichtung bei Betätigung des Aktuators nicht geschaltet wird und somit in einem geöffneten Zustand bleibt. Auf diese Weise kann das aus dem Zylinder geförderte Hydraulikfluid über den ersten Fluidpfad, über den Bremskreis und über den zweiten Fluidpfad an den Ventileinlass der druckgesteuerte Ventileinrichtung gelangen. Das Hydraulikfluid kann dann im Testkreis solange aufgestaut werden, bis die druckgesteuerte Ventileinrichtung aufgrund des aufgebauten Druckes in eine geöffneten Zustand schaltet. Erst dann kann das Hydraulikfluid aus dem Testkreis in das Hydraulikfluidreservoir abströmen und der Druck steigt nicht weiter an. Aus dem gemessenen Druckanstieg und den plötzlichen Einbruch im Druckanstieg kann der Schaltdruck der druckgesteuerten Ventileinrichtung ermittelt werden.

Ferner kann die Bremsanlage wenigstens einen mit der ersten Zylinder-Kolben-Einrichtung oder mit der zweiten Zylinder-Kolben-Einrichtung fluidisch koppelbaren Bremskreis und wenigstens eine in dem wenigstens einen Bremskreis angeordnete dritte Ventileinrichtung zur wahlweisen fluidischen Verbindung einer Radbremse mit der ersten oder zweiten Zylinder-Kolben-Einrichtung umfassen. In diesem Fall kann das Verfahren zusätzlich den Schritt des Schaltens der dritten Ventileinrichtung von einem geöffneten Zustand in einem geschlossenen Zustand umfassen, bevor der Aktuator betätigt wird. Auf diese Weise kann kein Hydraulikfluid während des Testverfahrens an die Radbremsen der Bremsanlage gelangen. Dadurch kann verhindert werden, dass die Radbremsen während der Testverfahren betätigt werden und somit die Druckerfassung verfälschen. Das oben genannte Testverfahren kann während einer Bremsbetrieb-freien Phase durchgeführt werden. Ferner kann das Verfahren automatisch und damit vollständig Fahrer-unabhängig durchgeführt werden.

Gemäß einem dritten Aspekt der Erfindung wird ein Computerprogrammprodukt bereitgestellt, mit Programmcodemittel zur Durchführung des hier vorgestellten Verfahrens, wenn das Computerprogrammprodukt auf einem Prozessor abläuft. Das Computerprogrammprodukt kann auf einem computerlesbaren Datenträger gespeichert sein.

### Kurze Beschreibung der Zeichnungen

Weitere Vorteile, Aspekte und Einzelheiten der hier vorgestellten elektrohydraulischen Kraftfahrzeug-Bremsanlage ergeben sich aus der nachfolgenden Beschreibung exemplarischer Ausführungsbeispiele sowie aus den Figuren. Es zeigen:
- Fig. 1A: ein Ausführungsbeispiel einer elektrohydraulischen Fahrzeug-Bremsanlage;
- Fig. 1B: ein weiteres Ausführungsbeispiel einer elektrohydraulischen Fahrzeug-Bremsanlage;
- Fig. 2: ein weiteres Ausführungsbeispiel einer elektrohydraulischen Fahrzeug-Bremsanlage;
- Fign. 3A/3B: ein Ausführungsbeispiel einer druckgesteuerten Ventileinrichtung der elektrohydraulischen Fahrzeugbremsanlage;
- Fig. 4: ein Flussdiagramm zur Darstellung eines Testverfahrens für die Fahrzeug-Bremsanlagen gemäß der Fign. 1 und 2;
- Fig. 5: die Fahrzeug-Bremsanlage gemäß Fig. 2 zur Darstellung des Testverfahrens gemäß Fig. 4;
- Fig. 6: ein Flussdiagramm zur Darstellung eines weiteren Testverfahrens für die Fahrzeug-Bremsanlagen gemäß der Fign. 1 und 2;
- Fig. 7: ein Flussdiagramm zur Darstellung eines weiteren Testverfahrens für die Fahrzeug-Bremsanlagen gemäß der Fig. 2;
- Fig. 8: die Fahrzeug-Bremsanlage gemäß Fig. 2 zur Darstellung des Testverfahrens gemäß Fig. 7;
- Fig. 9: ein Flussdiagramm zur Darstellung eines Entlüftungsverfahrens für die die Fahrzeug-Bremsanlagen gemäß der Fign. 1 und 2;
- Fig. 10: die elektrohydraulische Fahrzeugbremsanlage gemäß Fig. 2 zur Darstellung des Entlüftungsverfahrens gemäß Fig. 8;
- Fig. 11: ein Flussdiagramm zur Darstellung eines weiteren Entlüftungsverfahrens für die die Fahrzeug-Bremsanlagen gemäß der Fign. 1 und 2; und
- Fign. 12A/12B: die elektrohydraulische Fahrzeug-Bremsanlage gemäß Fig. 2 zur Darstellung des Entlüftungsverfahrens gemäß Fig. 11.

### Detaillierte Beschreibung

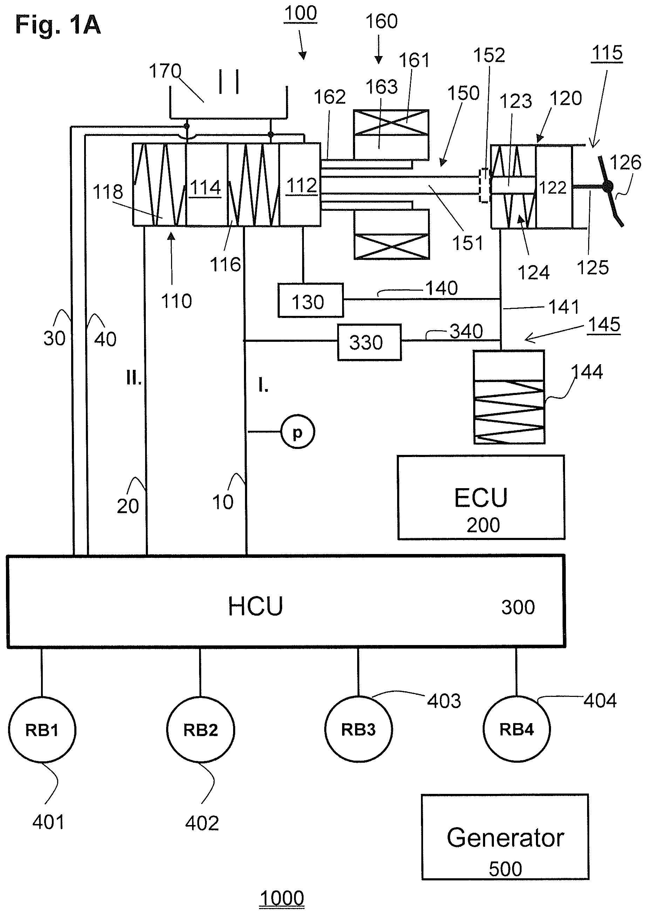

Fig. 1A zeigt eine elektrohydraulische Kraftfahrzeug-Bremsanlage 1000 mit zwei Bremskreisen 10, 20. Die Kraftfahrzeug-Bremsanlage 1000 umfasst eine Hydraulikdruckerzeuger-Baugruppe 100, einen ersten Fluidpfad 340, einen in dem ersten Fluidpfad 340 angeordnete Ventileinrichtung 330, einen zweiten Fluidpfad 140, 140a, 140b, eine im zweiten Fluidpfad 140, 140a, 140b angeordnete zweite Ventileinrichtung 130, einen Simulatorkreis 145, ein elektronisches Steuergerät bzw. eine elektronische Steuereinheit 200 (im Folgenden ECU genannt), eine hydraulische Steuereinheit 300 (im Folgenden HCU genannt) und jeweils mit einem ersten Bremskreis 10 und einem zweiten Bremskreis 20 fluidisch gekoppelte Radbremsen 401-404. Ferner umfasst die Bremsanlage 1000 zwei Rückleitungen 30, 40, die jeweils mit einem ersten Ende mit einem entsprechenden Bremskreis 10, 20 fluidisch gekoppelt sind und mit einem zweiten Ende in einem drucklosen Hydraulikfluidreservoir 170 münden.

Optional hierzu kann die Bremsanlage eine Generatoreinheit 500 zur Energierückgewinnung umfassen. Die Generatoreinheit 500 ist dazu ausgelegt, kinetische Energie im Bremsbetrieb in elektrische Energie zurück zu wandeln. Hierfür ist die Generatoreinheit 500 mit wenigstens einem Rad 400 verbunden, um die Rotationsbewegung in elektrische Energie umzuwandeln. Ferner kann die Generatoreinheit 500 mit einem Energiespeicher (z.B. einer Batterie, in Fig. 1A nicht gezeigt) verbunden sein, welche die gewonnene elektrische Energie speichert.

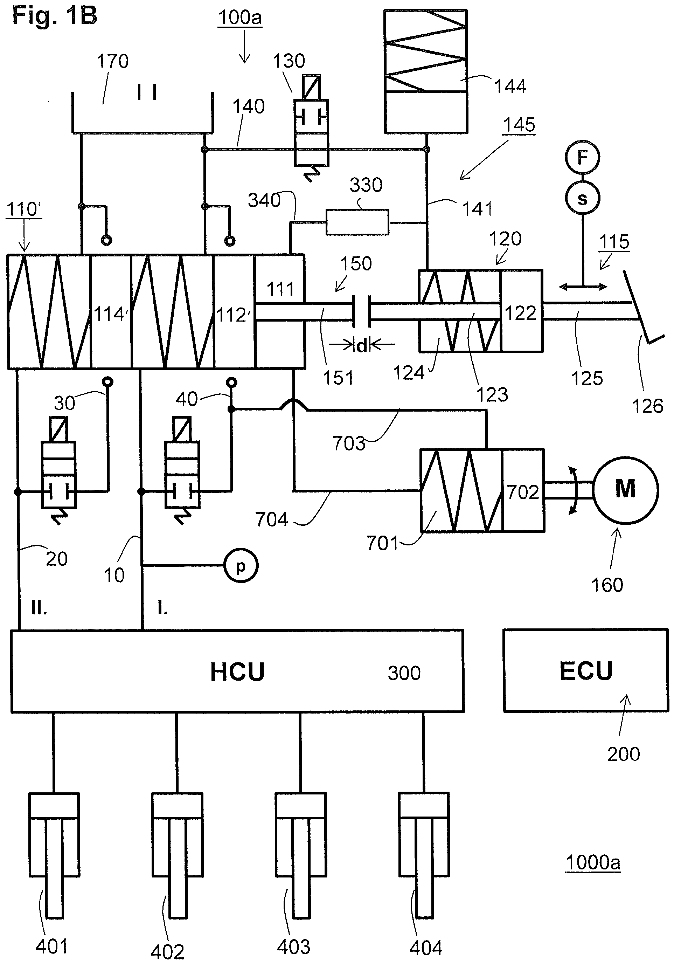

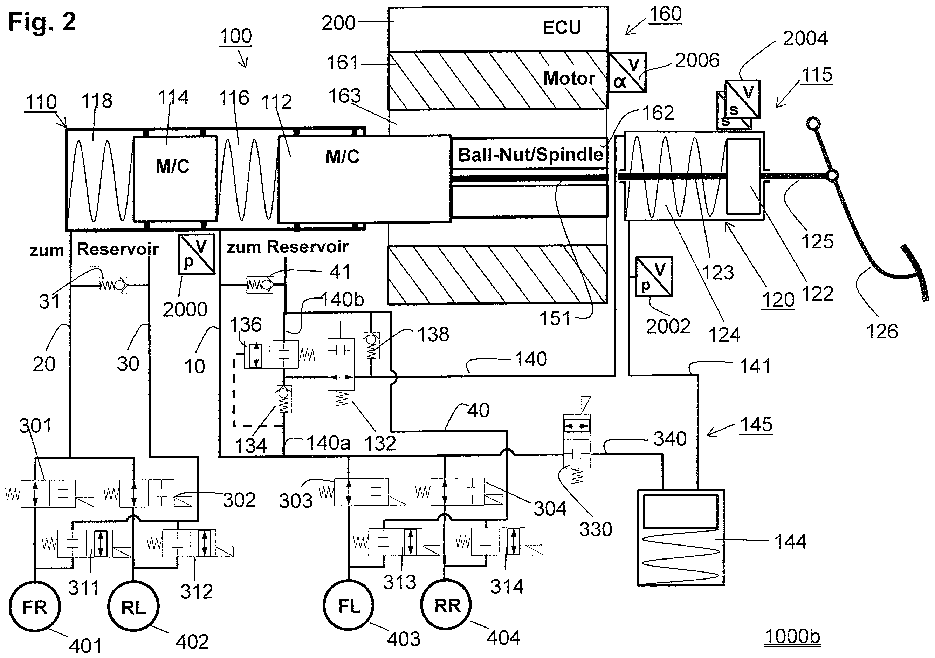

Die HCU 300 umfasst mehrere Ventilgruppen zur Hydraulikdruckregelung in den beiden Bremskreisen 10, 20. Abweichend von der in Figur 1 gezeigten separaten Ausbildung von HCU 300, der ersten Ventileinrichtung 330 und der zweiten Ventileinrichtung 130, kann die erste Ventileinrichtung 330 und die zweite Ventileinrichtung 130 auch in der HCU 300 integriert sein. Realisierungsbeispiele für die Ventile bzw. Ventilgruppen der HCU 300 werden in Zusammenhang mit der Fig. 2 weiter unten ausführlicher beschrieben.

Die ECU 200 ist wenigstens zur Ansteuerung von elektrisch betätigbaren Ventilen der HCU 300 ausgelegt. Sie ist ferner dazu ausgelegt, die Baugruppe 100 anzusteuern. Die ECU 200 umfasst hierfür Steuerfunktionen für die HCU 300 und die Baugruppe 100. Alternativ hierzu ist auch denkbar, dass die Ansteuerfunktionen für die Baugruppe 100 und HCU 300 jeweils in getrennten elektronischen Steueruntereinheiten organisiert sind und diese Untereinheiten im Bremsbetrieb entsprechend zusammenwirken.

Im Folgenden wird der Aufbau und die Funktionsweise der Hydraulikdruckerzeuger-Baugruppe 100 näher erläutert. Zunächst wird mit Bezug auf Fig. 1A eine Implementierungsmöglichkeit für die Baugruppe 100 näher beschrieben. Die Hydraulikdruckerzeuger-Baugruppe 100 umfasst einen Hauptbremszylinder 110, eine Pedalschnittstelle 115 mit einem Hydraulikzylinder 120, eine Kraftübertragungseinrichtung 150 und einen elektromechanischen Aktuator 160. Gemäß einer Variante kann das drucklose Hydraulikfluidreservoir 170 zum Speichern von Hydraulikfluid in die Baugruppe 100 integriert sein.

Der Hauptbremszylinder 110 ist im Ausführungsbeispiel als Tandem-Hauptbremszylinder 110 ausgebildet. Eine im Hauptbremszylinder 110 verschiebbar aufgenommene Kolbenanordnung 112, 114 umfasst einen ersten Kolben 112 (im folgenden Primärkolben genannt) und einen zweiten Kolben 114 (im folgenden Sekundärkolben oder Schwimmkolben genannt). Hierbei wird durch die in Fahrtrichtung zeigende Stirnseite (linke Stirnseite) des ersten Kolbens 112 und durch die gegen die Fahrtrichtung zeigende Stirnseite des zweiten Kolbens 114 eine erste Hydraulikkammer 116 definiert. Ferner wird durch die in Fahrtrichtung zeigende Stirnseite des Sekundärkolbens 114 und den Zylinderboden eine zweite Hydraulikkammer 118 definiert ist. Beide Hydraulikkammern 116, 118 sind jeweils mit einem Bremskreis 10, 20 der Bremsanlage 1000 (d.h. mit dem ersten Bremskreis 10 bzw. mit dem zweiten Bremskreis 20) fluidisch gekoppelt. Ferner stehen die Hydraulikkammern 116, 118 in bekannter Weise mit dem drucklosen Hydraulikfluidreservoir 170 fluidisch in Verbindung.

Durch Betätigung des Primärkolbens 112 und des Sekundärkolbens 114 kann Hydraulikfluid aus den beiden Kammern 116, 118 in die jeweiligen Bremskreise 10, 20 gefördert werden und somit ein Hydraulikdruck an den Radbremsen 401-404 erzeugt werden. Die Betätigung kann durch den Fahrer über das Bremspedal 126 oder aber über den elektromechanischen Aktuator 160 erfolgen, wie weiter unten ausführlicher beschrieben wird. Erfolgt die Betätigung der Kolbenanordnung 112, 114 ausschließlich über den Aktuator 160, so befindet sich die Baugruppe 100 im Normalbetrieb. Ein Bremsvorgang erfolgt dann nach dem Brake-by-Wire-Prinzip. Erfolgt hingegen die Betätigung der der Kolbenanordnung 112, 114 fußkraftbetätigt über das Bremspedal 126, so befindet sich die Baugruppe 100 im Notbetrieb (Push-Through-Betrieb).

Der an den Radbremsen 401-404 im Rahmen eines Normalbetriebs oder eines Push-Through-Betriebs aufgebaute Hydraulikdruck kann über die Rückleitungen (Fluidpfade 30, 40) wieder abgebaut werden. Diese münden direkt im drucklosen Hydraulikfluidreservoir 170 und ermöglichen, dass Hydraulikfluid aus den Radbremsen 401 - 404 über die Fluidpfade 30, 40 in das drucklose Hydraulikfluidreservoir 170 zurückströmen kann.

Es versteht sich, dass die vorliegende Offenbarung nicht von den Konstruktionsdetails des Hauptbremszylinders 110 abhängt. Anstelle des hier beschriebenen Tandem-Hauptbremszylinders 110 kann der Hauptbremszylinder in einer "Twin"-Anordnung ausgebildet sein, bei der die den beiden Bremskreisen 10, 20 zugeordneten Hydraulikkammern 116, 118 parallel zueinander angeordnet sind. Ferner kann der Hauptbremszylinder 110 mehr als zwei Hydraulikkammern 116, 118 aufweisen und die Bremsanlage 1000 mehr als zwei Bremskreise 10, 20 umfassen.

Die Pedalschnittstelle 115 umfasst den Hydraulikzylinder 120, einen im Hydraulikzylinder 120 verschiebbar aufgenommenen Kolben 122, einen ersten Stößel 123 und einen zweiten Stößel 125. Der erste Stößel 123 ist an einer der Fahrtrichtung zugewandten Stirnseite des Kolbens 122 befestigt. Der erste Stößel 123 ist hierbei koaxial zum Kolben 122 angeordnet. Der erste Stößel 123 ist dazu vorgesehen, eine Betätigung des Bremspedals 126 auf die Kraftübertragungseinrichtung 150 zu übertragen.

Der zweite Stößel 125 ist mit einem ersten Ende an einer einem Bremspedal 126 zugewandten Stirnseite (also an der der Fahrtrichtung abgewandten Stirnseite) des Kolbens 122 befestigt. Der zweite Stößel 125 ist ebenso koaxial zum Kolben 122 angeordnet. Ein zweites Ende des zweiten Stößels 125 ist mit dem Bremspedal 126 mechanisch gekoppelt. Auf diese Weise kann eine Pedalbetätigung (d.h. Niederdrücken des Bremspedals 126) auf den Kolben 122 übertragen werden, welcher dann in Fahrtrichtung (in Fig. 1A nach links) verschoben wird. Durch den ersten Stößel 123 kann die Pedalbetätigung (Bewegung und die für die Bewegung aufgebrachte Kraft) auf die Kraftübertragungseinrichtung 150 übertragen werden.

Ferner definiert die in Fahrtrichtung zeigende Stirnseite des Kolbens 122 zusammen mit dem Hydraulikzylinder 120 eine Hydraulikkammer 124, die mit Hydraulikfluid gefüllt ist. Bei Betätigung des Bremspedals 126 wird der Kolben 122 in Fahrtrichtung verschoben, wodurch Hydraulikfluid aus der Kammer 124 verdrängt wird. Das verdrängte Hydraulikfluid kann hierbei in den Simulatorkreis 145 oder (zumindest teilweise) in den wenigstens einen Bremskreis 10, 20 und den Hauptbremszylinder 110 verschoben werden, wie weiter unten ausführlicher beschrieben wird.

Die Kraftübertragungseinrichtung 150 ist zwischen dem Hauptbremszylinder 110 und dem Hydraulikzylinder 120 angeordnet. Sie umfasst wenigstens eine Kolbenstange 151. Die Kolbenstange 151 ist koaxial zur Kolbenanordnung 112, 114 des Hauptbremszylinders 110 und zum Kolben 122 des Hydraulikzylinders 120 angeordnet. Sie erstreckt sich durch eine (als Hohlkörper ausgebildete) Spindel 162 des elektromechanischen Aktuators 160 und kann an einem ersten Ende (linkes Ende in Fig. 1A) mit wenigstens dem Primärkolben 112 der Kolbenanordnung 112, 114 in Anlage gebracht werden. Die Kolbenstange 151 kann ferner an einem zweiten Ende mit dem ersten Stößel 123 der Pedalschnittstelle 115 in Anlage gebracht werden.

Wie in Fig. 1A weiter dargestellt, ist das zweite Ende der Kolbenstange 151 durch eine Lücke (bzw. Spalt) 152 vom ersten Stößel 123 räumlich getrennt. Diese Lücke 152 wird im Normalbetrieb der Baugruppe 100 aufgrund einer vom Aktuator 160 durchgeführten Verschiebung des Primärkolbens 112 und der Kolbenstange 151 in Fahrtrichtung selbst bei Niederdrücken des Bremspedals 126 aufrechterhalten. Somit kommt der erste Stößel 123 während eines Normalbetriebs der Baugruppe 100 nicht in Anlage mit der Kolbenstange 151, und die auf das Bremspedal 126 einwirkende Betätigungskraft kann nicht auf die Kolbenstange 151 übertragen werden.

Im Notbetrieb der Baugruppe 100 bleibt der Aktuator 160 unbetätigt. Somit wird auch die Kolbenstange 151 nicht durch den Aktuator 160 verschoben. Bei Niederdrücken des Bremspedals 126 kann die (kleine) Lücke 152 zwischen dem ersten Stößel 123 und dem zweiten Ende der Kolbenstange 151 schnell überwunden werden. Der erste Stößel 123 gelangt in Anlage mit der Kolbenstange 151. Die Kolbenstange 151 überträgt dann die beim Niederdrücken des Bremspedals 126 verursachte Verschiebung des Kolbens 122 in Richtung der Kolbenstange 151 direkt auf den Primärkolben 112 des Hauptbremszylinders 110 (Push-Through-Prinzip). Der Primärkolben 112 überträgt die Verschiebung wiederum auf den Sekundärkolben 114. Durch die Betätigung von Primärkolben 112 und Sekundärkolben 114 kann dann ein Hydraulikdruck an den Radbremsen 401-404 aufgebaut werden. Insgesamt ermöglicht die hier beschriebene mechanische Kraftübertragungseinrichtung 150 eine direkte mechanische Kopplung des Primärkolbens 112 mit dem Kolben 122 der Pedalschnittstelle 115 bzw. dem Bremspedal 126 zum Hydraulikdruckaufbau während des Notbetriebs (d.h. wenn kein Hydraulikdruck über den Aktuator 160 aufbaubar ist).

Der elektromechanische Aktuator 160 ist gemäß der in Fig. 1A gezeigten Variante ebenso zwischen dem Hauptbremszylinder 110 und dem Hydraulikzylinder 120 angeordnet. Hauptbremszylinder 110, elektromechanischer Aktuator 160 und Hydraulikzylinder 120 sind nacheinander und koaxial zu einer durch den Hauptbremszylinder 110 vorgegebenen Zylinderachse angeordnet. Der elektromechanische Aktuator 160 ist dazu vorgesehen, auf die Kolbenanordnung 112, 114 des Hauptbremszylinders 110 einzuwirken, um einen Hydraulikdruck in der Bremsanlage 1000 fußkraftunabhängig aufbauen zu können. Im Normalbetrieb der Baugruppe 100 wird der Hydraulikdruck ausschließlich über den elektromechanischen Aktuator 160 aufgebaut.

Der elektromechanische Aktuator 160 umfasst einen Elektromotor 161 sowie ein mit dem Elektromotor 161 gekoppeltes Getriebe 162, 163 zur Übertragung der Motorbewegung auf die Kolbenanordnung 112, 114 des Hauptbremszylinders 110. Im Ausführungsbeispiel ist das Getriebe eine Anordnung aus einer drehbar gelagerten Mutter 163 und einer mit der Mutter 163 (z.B. über Wälzkörper wie Kugeln) in Eingriff stehenden und in axialer Richtung beweglichen Spindel 162. In anderen Ausführungen können Zahnstangengetriebe oder andere Getriebetypen zum Einsatz gelangen.

Der Elektromotor 161 besitzt im vorliegenden Ausführungsbeispiel eine zylindrische Bauform und erstreckt sich konzentrisch zur Übertragungseinrichtung 150. Genauer gesagt ist der Elektromotor 161 radial außen bezüglich der Kolbenstange 151 der Übertragungseinrichtung 150 angeordnet. Ein Rotor (nicht dargestellt) des Elektromotors 161 ist drehfest mit der Getriebemutter 163 gekoppelt, um diese in Drehung zu versetzen. Eine Drehbewegung der Mutter 163 überträgt sich derart auf die Spindel 162, dass eine axiale Verschiebung der Spindel 162 resultiert. Die in Fig. 1A linke Stirnseite der Spindel 162 kann dabei (ggf. über ein Zwischenglied) in Anlage an die in Fig. 1A rechte Stirnseite des Primärkolbens 112 gelangen und in Folge dessen den Primärkolben 112 (zusammen mit dem Sekundärkolben 114) nach links verschieben und somit Hydraulikfluid in die Bremskreise 10, 20 fördern. Umgekehrt kann die Kolbenanordnung 112, 114 bei Zurückfahren der Spindel 162 (also bei Bewegung nach rechts, entgegen die Fahrtrichtung) über den in den Kammern 116, 118 vorherrschenden Hydraulikdruck und/oder über in den Kammern 116, 118 angeordneten Rückstellfedern in einen unbetätigten Zustand (Ausgangsposition) gebracht werden.

Der elektromechanische Aktuator 160 ist somit dazu geeignet, den Primärkolben 112 des Hauptbremszylinders 110 eigenständig (d.h. fußkraftunabhängig) zu verschieben, um einen Hydraulikdruck an den Radbremsen 401-404 gemäß dem Brake-by-Wire- Prinzip aufzubauen. Die Höhe des Druckaufbaus kann über wenigstens einen Ansteuerungswert der ECU 200 festgelegt werden, welcher eine Information darüber enthält, wie stark der Aktuator 160 betätigt werden soll (bzw. die Spindel 162 in Fahrtrichtung verschoben werden soll). Der Ansteuerungswert kann auf der Grundlage einer mit dem Bremspedal 126 oder der Pedalschnittstelle 115 gekoppelten Sensorik (z.B. mittels Weg- und/oder Kraftsensorik) ermittelt werden.

Bei der in Fig. 1A gezeigten Variante der Baugruppe 100 kann ein Hydraulikdruck in dem wenigstens einen Bremskreis 10, 20 über den Hauptbremszylinder 110 und die darin verschiebbar aufgenommene Kolbenanordnung 112, 144 aufgebaut werden, indem die Kolbenanordnung 112, 114 entweder über eine durch den elektromechanischen Aktuator 160 aufgebrachte Betätigungskraft oder durch eine vom Fahrer am Bremspedal 126 aufgebrachte Betätigungskraft und über die Kolben-Stößel-Anordnung 122, 123, 125 der Pedalschnittstelle 115 und über die Kraftübertragungseinrichtung 150 übertragene Betätigungskraft betätigt wird. Im ersteren Betätigungsmodus der Kolbenanordnung 112, 114 befindet sich die Baugruppe 100 im Normalbetrieb, im letzteren Betätigungsmodus im Push-Through-Betrieb.

Gemäß einer alternativen Variante kann der elektromechanische Aktuator 160 der Baugruppe 100 auf eine vom Hauptbremszylinder 110 verschiedene Zylinder-Kolben-Einrichtung einwirken, um einen Hydraulikdruck an den Radbremsen 401-404 fußkraftunabhängig aufzubauen. In diesem Fall ist die Zylinder-Kolben-Einrichtung zusätzlich und beispielsweise parallel zum Hauptbremszylinder 110 angeordnet, wie aus der Druckschrift WO 2011/141158 A2 bekannt ist. Alternativ zu dieser Anordnung ist auch der Einsatz eines elektrohydraulischen Aktuators (z.B. einer Hydraulikpumpe) denkbar, um - dem Brake-by-Wire-Prinzip folgend - Hydraulikfluid in den ersten und zweiten Bremskreis 10, 20 zu fördern. Die vorliegende Offenbarung hängt nicht von der Form und Anordnung des eingesetzten Aktuators 160 zur Realisierung eines Brake-by-Wire-Betriebes ab.

Der bereits erwähnte Simulatorkreis 145 umfasst einen Hydraulikdruckspeicher 144, welcher über einen Fluidpfad 141 (und einem darin angeordneten Drosselventil oder Drosselrückschlagventil) mit dem Hydraulikzylinder 120 fluidisch gekoppelt ist. Der Hydraulikdruckspeicher 144 ist als Kolben-Zylinder-Anordnung realisiert, wobei der im Zylinder verschiebbar aufgenommene Kolben durch eine Feder vorgespannt ist.. Bei Betätigung des Bremspedals 126 im Normalbetrieb wird das aus dem Hydraulikzylinder 120 geförderte Hydraulikfluid über den Fluidpfad 141 in den Hydraulikdruckspeicher 144 geleitet. Das in den Hydraulikdruckspeicher 144 strömende Fluid verschiebt dabei den durch die Feder vorgespannten Kolben. Die für die Verschiebung des Kolbens aufzubringende Kraft wirkt als Pedalrückstellkraft auf das Bremspedal 126 zurück. Mit anderen Worten generiert der Hydraulikdruckspeicher 144 einen Gegendruck, welcher auf den Kolben 122 und auf das Bremspedal 126 zurückwirkt. Auf diese Weise wird eine am Bremspedal 126 wirkende Gegenkraft erzeugt, welche im Brake-by-Wire-Betrieb ein Durchhängen des Bremspedals 126 verhindert und dem Fahrer ein realistisches Bremspedalgefühl vorgibt.

Wie in Fig. 1A schematisch dargestellt, umfasst die Bremsanlage 1000 den ersten Fluidpfad 340 mit der darin angeordneten ersten Ventileinrichtung 330. Der Fluidpfad 340 und die darin angeordnete Ventileinrichtung 330 sind dazu ausgebildet, den Hauptbremszylinder 110 mit dem Simulatorkreis 145 wahlweise fluidisch zu koppeln. Hierfür kann der erste Fluidpfad 340 mit seinem ersten Ende in den Simulatorkreis 145 (genauer gesagt in den Fluidpfad 141) und mit seinem zweiten Ende in den wenigstens einen Bremskreis 10, 20 (wie beispielsweise in den ersten Bremskreis 10, wie in Fig. 1A dargestellt) münden. Gemäß einer alternativen Ausführung kann der Fluidpfad 340 mit seinem zweiten Ende auch direkt in den Hauptbremszylinder 110 münden. Wesentlich ist nur, dass über den ersten Fluidpfad 340 eine fluidische Verbindung zwischen dem Hydraulikdruckerzeuger der Baugruppe 100 und dem Simulatorkreis 145 realisierbar ist. In diesem Zusammenhang ist zu beachten, dass gemäß der in Fig. 1A gezeigten Variante der elektrohydraulischen Bremsanlage 1000 der Hydraulikdruckerzeuger durch den Hauptbremszylinder 110, die im Hauptbremszylinder 110 angeordnete Kolbenanordnung 112, 114 und den auf die Kolbenanordnung 112, 114 einwirkenden elektromechanischen Aktuator 160 realisiert ist. Es versteht sich, dass in der in der Druckschrift WO 2011/141158 A2 beschriebenen Bremsanlage der Hydraulikdruckerzeuger in Form einer vom Hauptbremszylinder verschiedenen Zylinder-Kolben-Anordnung und einen auf diese Zylinder-Kolben-Anordnung einwirkenden elektromechanischen Aktuator realisiert ist.

Die erste Ventileinrichtung 330 ist dazu ausgebildet, je nach Ansteuerung einen geöffneten oder einen geschlossenen Zustand einzunehmen, um den Simulatorkreis 145 vom ersten Bremskreis 10 bzw. vom Hauptbremszylinder 110 fluidisch zu koppeln oder zu entkoppeln. Die erste Ventileinrichtung 330 nimmt im unbetätigten Zustand einen geschlossenen Zustand ein, so dass kein Hydraulikfluid aus dem ersten Bremskreis 10 in den Simulatorkreis 145 strömen kann. Insbesondere bleibt die erste Ventileinrichtung im Push-Through-Betrieb der Baugruppe 100 geschlossen, wodurch verhindert wird, dass ein aus dem Hauptbremszylinder 110 verdrängtes Hydraulikfluid in den Simulatorkreis 145 strömen kann.

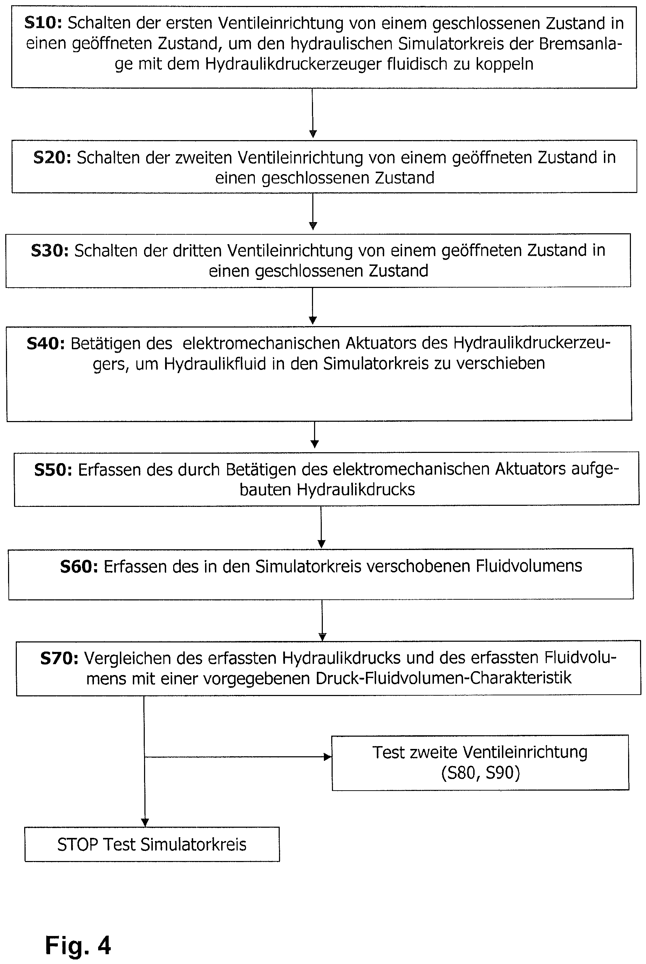

Die erste Ventileinrichtung 330 kann durch elektrische Betätigung über die ECU 200 in einen geöffneten Zustand geschaltet werden, um den Simulatorkreis 145 mit dem ersten Bremskreis 10, 20 bzw. dem Hauptbremszylinder 110 fluidisch zu koppeln. Die Schaltung der ersten Ventileinrichtung 330 in einen geöffneten Zustand findet jedoch nicht während eines regulären Bremsbetriebes statt. Die Öffnung der ersten Ventileinrichtung 330 findet im Rahmen eines automatischen Entlüftungsverfahrens oder im Rahmen eines Testverfahrens für die Bremsanlage 1000 statt, nicht jedoch während eines Bremsvorgangs, wie in Zusammenhang mit den Fign. 4-12B weiter unten beschrieben wird. Mit anderen Worten bleibt die erste Ventileinrichtung 330 auch während eines Bremsvorgangs im Normalbertrieb der Baugruppe 100 unbetätigt und somit geschlossen.

Die zweite Verntileinrichtung 130 befindet sich im unbetätigten Zustand in einem geöffneten Zustand. Die Ventileinrichtung ist beispielsweise im Push-Through-Betrieb der Baugruppe 100 geöffnet. Dabei kann Hydraulikfluid aus dem Hydraulikzylinder 120 in das drucklose Hydraulikfluidreservoir 170 abfließen. Im Normalbetrieb der Baugruppe 100 kann die Ventileinrichtung 130 durch elektrische Ansteuerung über die ECU 200 in einen geschlossenen Zustand geschaltet werden. Dadurch wird der Simulatorkreis 145 vom Hydraulikfluidreservoir 170 hydraulisch entkoppelt. Ein aus dem Hydraulikzylinder 120 durch Betätigung des Kolbens 122 verdrängtes Hydraulikfluid wird dann über den Fluidpfad 141 in den Hydraulikdruckspeicher 144 abgeleitet, welcher dann ein realistisches Pedalrückwirkverhalten erzeugt, wie bereits weiter oben besprochen. Die Ventileinrichtung 130 kann aber auch im Rahmen eines Bremsanlage-Testverfahrens oder im Rahmen eines automatischen Entlüftungsverfahrens der Bremsanlage 1000 betätigt werden, wie anhand der Fign. 4-12B weiter unten ausführlich beschrieben wird.

Insgesamt ermöglicht der hier beschriebene erste Fluidpfad 340 mit der darin angeordneten ersten Ventileinrichtung 330 und der zweite Fluidpfad 140 mit der darin angeordneten zweiten Ventileinrichtung 130 die Realisierung eines Fluidkreises (im Folgenden Testkreis genannt), welcher je nach Schaltung der beiden Ventileinrichtungen 130, 330 eine fluidische Kopplung des Hauptbremszylinders 110 mit dem Simulatorkreis 145 und eine fluidische Kopplung des Simulatorkreises 145 mit dem drucklosen Hydraulikfluidreservoir 170 ermöglicht. Auf diese Weise kann bei Öffnung der ersten Ventileinrichtung 330 und der zweiten Ventileinrichtung 130 ein durch die Hydraulikdruckerzeuger-Baugruppe 100 gefördertes Hydraulikfluid über den ersten Bremskreis 10 und über den damit fluidsch gekoppelten ersten Fluidpfad 340 in den Simulatorkreis 145 strömen. Von dort kann das Hydraulikfluid über den zweiten Fluidpfad 140 in das drucklose Hydraulikfluidreservoir 170 bzw. in den Hauptbremszylinder 110 (das drucklose Hydraulikfluidreservoir 170 steht in bekannter Weise mit dem Hauptbremszylinder 110 in fluidischer Verbindung) zurückströmen. Wie im nachfolgenden noch ausführlich beschrieben wird, kann durch den durch den ersten Fluidpfad 340, den Simulatorkreis 145, den zweiten Fluidpfad 140 realisierten Fluidkreis ein automatisches Entlüften der Bremsanlage 1000 (oder eines Teils der Bremsanlage) oder unterschiedliche automatische Testverfahren zum Testen des Simulatorkreises bzw. weiterer Komponenten der Bremsanlage 1000 implementiert werden.

Fig. 1B zeigt eine Bremsanlage 1000a mit einer alternativen Ausgestaltung einer Hydraulikdruckerzeuger-Baugruppe 100a. Die Baugruppe 100a unterscheidet sich von der in Fig. 1A gezeigten Baugruppe 100 im Wesentlichen darin, dass eine zu einem Hauptbremszylinder 110' zusätzliche Zylinder-Kolben-Einrichtung 701, 702 zur Hydraulikdruckerzeugung vorgesehen ist, welche auslassseitig über einen Fluidpfad 704 mit dem Hauptbremszylinder 110 und einlassseitig über einen Fluidpfad 703 mit einem Hydraulikfluidreservoir 170 fluidisch gekoppelt ist. Alle anderen Komponenten der Baugruppe 100a, wie beispielsweise der elektromechanische Aktuator 160, die Pedalschnittstelle 115 sowie die Kraftübertragungseinrichtung 150 sind in ihrer Bauweise und Funktion im Wesentlichen identisch zu der in Fig. 1A gezeigten Baugruppe 100. Sie sind daher mit denselben Bezugszeichen gekennzeichnet und werden nicht nochmals beschrieben. Dasselbe gilt für die weiteren in Fig. 1B gezeigten Komponenten der Bremsanlage, wie beispielsweise den Simulatorkreis 145, die ECU 300, die HCU 300 die mit dem Hauptbremszylinder 110 fluidisch gekoppelten Bremskreise 10, 20, die Rückleitungen 30, 40 und das Hydraulikfluidreservoir 170. Aufbau, Anordnung und Funktion dieser Komponenten entspricht dem Aufbau, der Funktion und der Anordnung der entsprechenden Komponenten der in Zusammenhang mit Fig. 1A beschriebenen Bremsanlage 1000. Es wird an dieser Stelle auf die entsprechenden Textstellen der Beschreibung der Fig. 1A verwiesen.

Im Folgenden wird kurz die fluidische Kopplung der Zylinder-Kolben-Einrichtung 701, 702 mit dem Hauptbremszylinder 110' beschrieben. Die Zylinder-Kolben-Einrichtung 701, 702 ist auslassseitig über den Fluidpfad 704 mit einer durch eine Rückseite eines Primärkolbens 112' (rechte Stirnseite des Primärkolbens 112' in Fig. 1B) und durch eine Zylinderwand definierte Hydraulikkammer 111 fluidisch gekoppelt. Die Fluidleitung 704 ist dazu ausgelegt, einen in der Zylinder-Kolben-Einrichtung 701, 702 erzeugten Hydraulikdruck auf den Primärkolben 112' zu übertragen. Der Primärkolben 112 (und folglich auch ein dem Primärkolben 112' nachgeordneter Sekundärkolben 114') wird dann in Folge eines in der Zylinder-Kolben-Einrichtung 701, 702 erzeugten und an der Rückseite des Primärkolbens 112 anliegenden Hydraulikdrucks verschoben (in Fig. 1B nach links). Auf diese Weise kann mit Hilfe der Zylinder-Kolben-Einrichtung 701, 720 über den Hauptbremszylinder 110' ein Hydraulikdruck an den Radbremsen 401-404 der Bremsanlage 1000a aufgebaut werden. Der an den Radbremsen 401-404 aufgebaute Hydraulikdruck entspricht dabei dem in der Zylinder-Kolben-Einrichtung 701, 702 erzeugten Hydraulikdruck.

Es bleibt festzuhalten, dass in der vorliegenden Anordnung im Normalbetrieb der Bremsanlage 1000a der Primärkolben 112' des Hauptbremszylinders 110' mit Hilfe eines separaten Druckerzeugers (Zylinder-Kolben-Einrichtung 700, 701) hydraulisch betätigt wird. In der in Fig. 1A gezeigten Konfiguration wird hingegen im Normalbetrieb der Bremsanlage 1000 der Primärkolben 112 mit Hilfe des mit dem Primärkolben 112 direkt koppelnden elektromechanischen Aktuators 160 betätigt. Ferner weist in der in Fig. 1B gezeigten Anordnung die zusätzliche Zylinder-Kolben-Einrichtung 701, 702 keine fluidische Verbindung mit einem der beiden Bremskreise 10, 20 der Bremsanlage 1000a auf. Somit steht im Normalbetrieb der in der Zylinder-Kolben-Einrichtung 701, 702 erzeugte Hydraulikdruck ausschließlich zur Betätigung der Kolben 112, 114 des Hauptbremszylinders 110 zur Verfügung.

Hinsichtlich der Anordnung und Betätigung der ersten Ventileinrichtung 330 im ersten Fluidpfad 340 und der Anordnung und Betätigung der zweiten Ventileinrichtung 130 im weiten Fluidpfad 140 sei auf die Beschreibung der ersten Ventileinrichtung 330 und der zweiten Ventileinrichtung 130 der in Fig. 1A gezeigten Bremsanlage verwiesen. Der einzige Unterschied zur in Fig. 1A gezeigten Anordnung besteht darin, dass der zweite Fluidpfad 340 mit seinem dem Simulatorkreis 145 abgewandten Ende nicht mit einem der Bremskreise 10, 20 der Bremsanlage sondern entweder direkt mit der Zylinder-Kolben-Einrichtung 701, 702 oder mit der Hydraulikkammer 111 (wie in Fig. 1B dargestellt) des Hauptbremszylinders 111' fluidisch gekoppelt ist. Beiden Anordnungen ist gemeinsam, dass der erste Fluidpfad 340 eine direkte fluidische Kopplung von Simulatorkreis 145 und der druckgebenden Zylinder-Kolben-Einrichtung 701, 702, 110, 112, 114 ermöglicht.

Es wird nun Bezug auf die in der Fig. 2 dargestellte Bremsanlage 1000b genommen. Anhand von Fig. 2 wird der Aufbau und die Funktionsweise der ersten Ventileinrichtung 330 und der zweiten Ventileinrichtung 130 sowie die in den Bremskreis 10, 20 und in den Rückleitungen 30, 40 angeordneten Ventile beschrieben. Aufbau und Funktionsweise der Baugruppe 100 entspricht jener in Fig. 1A und wird daher nicht erneut beschrieben. Insbesondere werden Komponenten der in Fig. 2 dargestellten hydraulischen Fahrzeugbremsanlage 1000b, welche mit jenen der in Fig. 1A dargestellten Komponenten übereinstimmen oder zu diesen in Funktion ähnlich sind, mit denselben Bezugszeichen versehen. Es sei in diesem Zusammenhang auf die Beschreibung der Fig. 1A verwiesen.

Wie in Fig. 2 gezeigt umfasst die Bremsanlage 1000b (bzw. die HCU 300) eine erste Gruppe von vier elektrisch betätigbaren Ventilen 301-304 (nachfolgend dritte Ventileinrichtung genannt), wobei jeder Radbremse 401-404 genau ein Ventil 301-304 der dritten Ventileinrichtung zugeordnet ist. Das einer jeden Radbremse 401-404 zugeordnete Ventil 301-304 ist dazu ausgelegt, die Radbremse 401-404, je nach Schaltzustand des Ventils 301-304, vom Hauptbremszylinder 110 hydraulisch zu entkoppeln oder mit dem Hauptbremszylinder 110 hydraulisch zu koppeln. Die zeitliche Ansteuerung der einzelnen Ventile 301-304 erfolgt hierbei über die ECU 200.

Beispielsweise können die Ventile 301-304 durch die ECU 200 in einem ZeitmultiplexBetrieb betätigt werden. Dabei kann jedem Ventil 301-304 (und damit jeder Radbremse 401-404) wenigstens ein Zeitschlitz für eine Ventilbetätigung zugeordnet sein. Diese Zuordnung schließt dabei nicht aus, dass einzelne Ventile 301-304 über mehrere Zeitschlitze hinweg geöffnet oder geschlossen gehalten werden oder mehr als zwei Ventile gleichzeitig geöffnet sind. Auf diese Weise kann bei einer Betriebsbremsung (wenn die Baugruppe 100 im Normalbetrieb ist) der durch die Baugruppe 100 aufgebaute Hydraulikdruck an den Radbremsen 401-404 radindividuell oder radgruppenindividuell zum Zweck einer Fahrdynamikregelung (also z.B. im ABS- und/oder ASR- und/oder ESP-Regelbetrieb) eingeregelt werden.

Die Bremsanlage 1000b umfasst ferner eine zweite Gruppe von vier elektrisch betätigbaren Ventilen 311-314, wobei jeder Radbremse 401-404 genau ein Ventil 311-314 zugeordnet ist. Die Ventile 311-314 sind hierbei in den Rückleitungen der Radbremsen 401-404 angeordnet, wobei die Rückleitungen der Radbremsen 401-404 eines Bremskreises 10, 20 am Ventilauslass der Ventile 311-314 in die dem Bremskreis 10, 20 zugeordnete Rückleitung 30, 40 münden. Die Rückleitungen 30, 40 münden in das Hydraulikfluidreservoir 170. Die beiden Ventile 311-314 nehmen im unbetätigten Zustand jeweils eine geschlossene Ventilstellung ein, so dass kein Hydraulikfluid von den jeweiligen Radbrmesen 401-404 in das drucklose Hydraulikfluidreservoir 170 strömen kann. Sie können im Zuge einer Fahrdynamikregelung (z.B. ABS- und/oder ASR und-oder ESP-Regelbetrieb) mittels elektrischer Ansteuerung der ECU 200 in eine geöffnete Ventilstellung geschaltet werden, um Hydraulikfluid über die jeweiligen Bremskreise 10, 20 in das drucklose Hydraulikfluidreservoir 170 kontrolliert abfließen zu lassen.

Die beiden Bremskreise 10, 20 sowie die den beiden Bremskreisen 10, 20 zugeordneten Rückleitungen 30, 40 können jeweils über ein Rückschlagventil 31, 41 miteinander fluidisch gekoppelt sein. Die Rückschlagventile 31, 41 sind hierbei vom Hauptbremszylinder 110 aus betrachtet vor den Ventilen 301-304, 311-314 in einem den ersten Bremskreis 10 mit der ersten Rückleitung 40 und in einem den zweiten Bremskreis 20 mit der zweiten Rückleitung 30 koppelnden Fluidpfad angeordnet. Die beiden Rückschlagventile 31, 41 sind dabei derart angeordnet, dass sie kein Hydraulikfluid vom jeweiligen Bremskreis 10, 20 in die jeweilige Rückleitung 30, 40 fließen lassen. Andererseits kann jedoch über die Rückschlagventile direkt Hydraulikfluid vom Hydraulikfluidreservoir 170 in die beiden Kammern 116, 118 des Hauptbremszylinders 110 strömen. Dies kann beispielsweise dann der Fall sein, wenn die Kolbenanordnung 112, 114 sich im Rückhub befindet und in den Kammern 116, 118 ein Unterdruck entsteht. Auf diese Weise kann sichergestellt werden, dass die Kammern 116, 118 des Hauptbremszylinders 110 auch nach einer Betätigung mit genügend Hydraulikfluid versorgt sind.

Nach Beschreibung der Ventile 31, 41 301-304, 311-314 erfolgt nun die Beschreibung der im ersten Fluidpfad 340 und im zweiten Fluidpfad 140 angeordneten Ventile.

Gemäß der in Fig. 2 gezeigten Ausführungsform der Bremsanlage 1000b mündet der erste Fluidpfad 340 mit seinem ersten Ende in den ersten Bremskreis 10 und mit seinem zweiten Ende in den Hydraulikdruckspeicher 144 des Simulatorkreises 145. Ferner mündet der zweite Fluidpfad 140 mit seinem ersten Ende in das Hydraulikfluidreservoir 170 (in Fig. 2 ist das Hydraulikfluidreservoir 170 nicht dargestellt und die Einmündung des zweiten Fluidpfades lediglich schematisch angedeutet) und mit seinem zweiten Ende in den Hydraulikzylinder 120 der Pedalschnittstelle 115. Gemäß einer alternativen Ausgestaltung kann der erste Fluidpfad 340 und/oder der zweite Fluidpfad 140 mit seinem jeweiligen zweiten Ende auch in den Fluidpfad 141 des Simulatorkreises 145 einmünden.

Die im ersten Fluidpfad 340 angeordnete erste Ventileinrichtung 330 ist in der in Fig. 2 gezeigten Ausführungsform der Bremsanlage 1000b als elektrisch betätigbares Ventil 330 realisiert. Das Ventil 330 nimmt im unbetätigten Zustand eine geschlossene Ventilstellung ein und sperrt somit den ersten Fluidpfad 340, so dass kein Hydraulikfluid über den ersten Fluidpfad 340 vom Hauptbremszylinder 110 bzw. vom ersten Bremskreis 10 in den Simulatorkreis 145 gelangen kann. Das Ventil 330 bleibt während des Normalbetriebs und während des Push-Through-Betriebs der Baugruppe 100 geschlossen. Es wird im Rahmen von automatischen Testverfahren oder im Rahmen eines automatischen Entlüftungsverfahren betätigt, wie in Zusammenhang mit den Fign. 4-12 beschrieben wird. Die im zweiten Fluidpfad 140 angeordnete zweite Ventileinrichtung 130 ist in der in Fig. 2 gezeigten Ausführungsform der Bremsanlage 1000b als elektrisch betätigbares Ventil 132 realisiert. Dem elektrisch betätigbaren Ventil 132 sind in der in Fig. 2 gezeigten Bremsanlage 1000b ferner ein erstes Überdruckventil 134 und ein zweites Überdruckventil 136 im zweiten Fluidpfad 140 stromabwärts nachgeschaltet. Genauer gesagt teilt sich der zweite Fluidpfad 140 nach dem elektrisch betätigbaren Ventil 132 in einen ersten Zweig 140a und in einen zweiten Zweig 140b auf, wobei der erste Zweig 140a in den ersten Bremskreis 10 mündet und der zweite Zweig 140b in das drucklose Hydraulikfluidreservoir 170 oder in der zum drucklosen Hydraulikfluidreservoir 170 führenden Rückleitung 40 mündet. Das erste Überdruckventil 134 ist in dem ersten Zweig 140a des zweiten Fluidpfads 140 angeordnet. Das zweite Überdruckventil 136 ist in dem zweiten Zweig 140b des zweiten Fluidpfads 140 angeordnet. Ferner ist ein zum elektrisch betätigbaren Ventil 132 und zum zweiten Rückschlagventil 136 parallel angeordnetes drittes Überdruckventil 138 in der Bremsanlage 1000b angeordnet.

Im Folgenden werden die Funktionen der im zweiten Fluidpfad angeordneten Ventile 132, 134, 136, 138 näher beschrieben.

Das im zweiten Fluidpfad 140 angeordnete elektrisch betätigbare Ventil 132 ist dazu ausgebildet, den Hydraulikzylinder 120 bzw. den Simulatorkreis 145 vom drucklosen Hydraulikfluidreservoir 170 fluidisch zu entkoppeln oder zu koppeln. Je nach Betriebsmodus der Bremsanlage (Push-Through-Betrieb, Brake-by-Wire- oder Normalbetrieb, Testbetrieb oder Entlüftung der Bremsanlage) kann das elektrisch betätigbare Ventil 132 in eine geöffnete oder geschlossenen Ventilstellung geschaltet werden. Das elektrisch betätigbare Ventil 132 nimmt im unbetätigten Zustand (unbestromten Zustand) eine geöffnete Ventilstellung ein. Bei einem Push-Through-Bremsbetrieb bleibt das Ventil 132 unbetätigt und somit funktionslos. Ein aus dem Hydraulikzylinder 120 verdrängtes Hydraulikfluid im Push-Through-Betrieb kann dann über das geöffnete Ventil 132 zu den stromabwärts angeordneten ersten und zweiten Überdruckventilen 134, 136 strömen und über diese Ventile (abhängig vom Hydraulikdruck im ersten Bremskreis 10) entweder in den ersten Bremskreis 10 oder in das Hydraulikfluidreservoir 170 abfließen.

Bei einem Bremsvorgang im Normalbetrieb der Baugruppe 100 wird hingegen das Ventil 132 stromgesteuert in eine geschlossene Ventilstellung geschaltet. Dem ersten Überdruckventil 134 und dem zweiten Überdruckventil 136 kommen dann keine Funktion zu, da sie durch das Ventil 132 vom Hydraulikzylinder 120 vollständig fluidisch entkoppelt sind. Der erste Fluidpfad 140 ist durch das elektrisch betätigbare Ventil 132 gesperrt und es kann weder Hydraulikfluid vom Hydraulikzylinder 120 der Pedalschnittstelle 115 in den Hauptbremszylinder 110 und/oder in das drucklose Hydraulikfluidreservoir 170 strömen, noch in umgekehrte Richtung vom Hauptbremszylinder 110 und/oder dem drucklosen Hydraulikfluidreservoir 170 in den Hydraulikzylinder 120. Vielmehr wird das aus der Kammer 124 des Hydraulikzylinders 120 verdrängte Hydraulikfluid über das Drosselventil 143 in den Hydraulikdruckspeicher 144 gefördert, wobei der Hydraulikdruckspeicher 144 die oben beschriebene Rückkopplung simuliert. Bei Rückbewegung des Bremspedals 126 kann das Ventil 132 wieder in die geöffnete Ventilstellung übergehen, indem die Stromversorgung für das Ventil 132 unterbrochen wird.

Die Betätigung des Ventils 132 im Rahmen eines Bremsanlagen-Testverfahrens oder im Rahmen einer automatischen Entlüftung der Bremsanlage 1000b wird in Zusammenhang mit den Fign. 4-12B beschrieben.

Das erste Überdruckventil 134 und das zweite Überdruckventil 136 sind zum druckgesteuerten Einspeisen von zusätzlichem Hydraulikfluid aus dem Hydraulikzylinder 120 in den wenigstens einen Bremskreis 10, 20 der Bremsanlage 1000b im Push-Through-Betrieb der Baugruppe 100 vorgesehen.

Das erste Überdruckventil 134 ist in der Gestalt eines Rückschlagventils ausgebildet. Das Rückschlagventil 134 ist derart angeordnet, dass es bei geöffneter Ventilstellung lediglich Hydraulikfluid vom Hydraulikzylinder 120 in den ersten Bremskreis 10 strömen lässt, jedoch in umgekehrter Richtung absolut sperrt. Das erste Rückschlagventil 134 ist als federbelastetes Rückschlagventil ausgebildet, das auf einen Überströmdruck von 0.3 bar begrenzt ist. Somit kann im Push-Through-Betrieb Hydraulikfluid aus dem Hydraulikzylinder 120 über das Ventil 132 (dieses ist im Push-Through-Betrieb geöffnet) und das nachgeschaltete Rückschlagventil 134 in den ersten Bremskreis (und über den damit fluidisch gekoppelten Hauptbremszylinder 110 auch in den zweiten Bremskreis) immer dann eingespeist werden, wenn der durch Verschieben des Kolbens 122 im Hydraulikzylinder 120 erzeugte Hydraulikdruck (welcher folglich auch am Ventileinlass des ersten Rückschlagventils 134 anliegt) mindestens 0.3 bar höher ist, als der im Hauptbremszylinder 110 erzeugte Hydraulikdruck, welcher auch am Ventilauslass des ersten Rückschlagventils 134 anliegt. Ferner wird Hydraulikfluid nicht nur am Beginn der Push-Through-Phase in den Hauptbremszylinder 110 und in die beiden Bremskreise 10, 20 gepumpt (solange der erzeugte Hydraulikdruck im Hauptbremszylinder 110 noch klein ist), sondern auch noch während einer Druckaufbauphase. Insgesamt wird somit ein im Push-Through-Bertrieb aus dem Hydraulikzylinder 120 verdrängtes Hydraulikfluid unter Druck in die beiden Bremskreise 10, 20 eingespeist.

Das in den Bremskreisen 10, 20 eingespeiste zusätzliche Hydraulikfluid hilft das Lüftspiel der Radbremsen 401-404 rasch zu überwinden, ohne dass hierfür viel Hydraulikfluid aus dem Hauptbremszylinder 110 in die beiden Bremskreise 10, 20 gefördert werden muss. Durch das zusätzliche eingespeiste Hydraulikfluid wird der Betätigungsweg der Kolbenanordnung 112, 114 (und somit des Bremspedals 126) besonders in der anfänglichen Push-Through-Phase erheblich verkürzt. Denn der anfängliche Betätigungsweg (Füllweg) der Kolbenanordnung 112, 114, der lediglich zur Verschiebung von Hydraulikfluid aus dem Hauptbremszylinder 110 zur Überwindung des Lüftspiels an den Radbremsen 401-404 nötig ist, kann durch die zusätzliche Fluideinspeisung aus dem Hydraulikzylinder 120 teilweise oder gänzlich kompensiert werden.

Im Push-Through-Betrieb werden der Kolben 122 und die Kobenanordnung 112, 114 über die Kraftübertragungseinrichtung 150 nur durch die am Pedal 126 aufgebrachte Betätigungskraft betätigt. Somit wirkt der am ersten Überdruckventil 134 anliegende Einspeisdruck und der aufgrund der Betätigung der Kolbenanordnung 112, 114 erzeugte Hydraulikdruck über die Kraftübertragungseinrichtung 150 direkt auf den Kolben 122 und auf das damit gekoppelte Pedal 126 zurück. Um insbesondere zu verhindern, dass ein großer Teil der am Bremspedal 126 aufgebrachten Betätigungskraft für die Erzeugung eines Einspeisdrucks verbraucht wird und somit nicht mehr für den Druckaufbau im Hauptbremszylinder 1110 verfügbar ist, ist das zweite Überdruckventil 136 vorgesehen. Dieses ist in dem zweiten Zweig 140b angeordnet, welcher in das drucklose Hydraulikfluidreservoir 170 mündet. Das zweite Überdruckventil 136 ist derart angeordnet, dass sein Ventileinlass mit dem Ventileinlass des ersten Überdruckventils 134 fluidisch gekoppelt ist, während sein Ventilauslass mit dem drucklosen Hydraulikfluidreservoir 170 fluidisch gekoppelt ist.

Gemäß der in Fig. 2 gezeigten Variante ist das zweite Überdruckventil 136 als druckgesteuertes Überdruckventil 136 ausgebildet, welches bei Erreichen eines vorgegebenen Druckes im Hauptbremszylinder 110 (beispielsweise 10 bar) von einem geschlossenen Zustand in einen geöffneten Zustand schaltet. Bei Erreichen des vorgegebenen Druckes im Hauptbremszylinder 110 schaltet das Überdruckventil 136 in eine geöffnete Ventilstellung. Das während des Push-Through-Betriebs im Fluidpfad 140 und an den Ventileinlässen der Ventile 134, 136 aufgestaute Hydraulikfluid kann dann über den zweiten Teilpfad 140b drucklos in das drucklose Hydraulikfluidreservoir 170 abströmen.

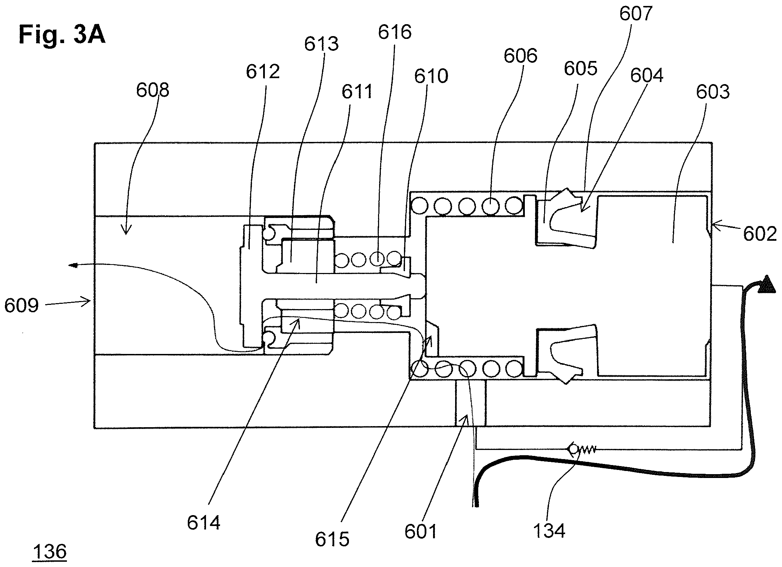

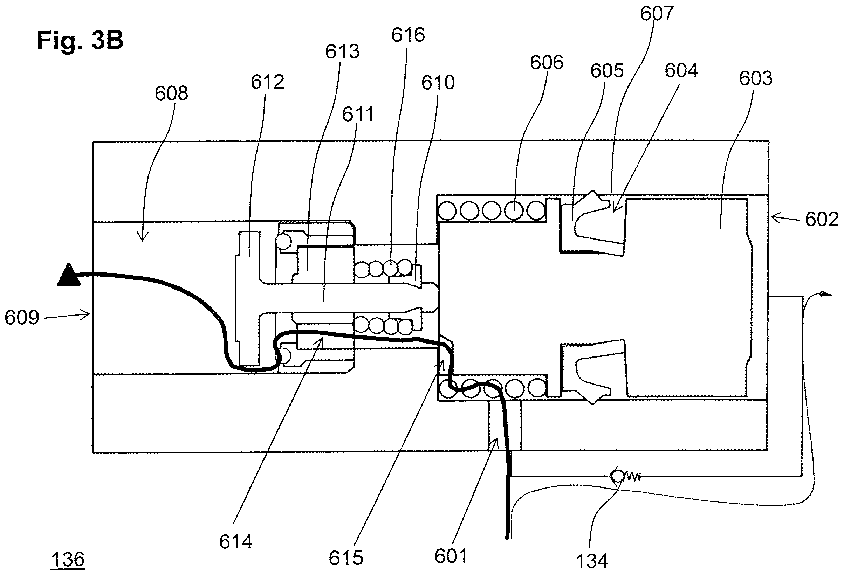

Der Aufbau und die Funktionsweise des druckgesteuerten zweiten Überdruckventils 136b anhand der Fign. 3a und 3b näher beschrieben.

Das Überdruckventil 136 weist einen Ventileinlass 601, einen Ventilauslass 609 sowie einen Druckeingang 602 auf. Der Ventileinlass 601 ist mit dem Hydraulikzylinder 120 fluidisch gekoppelt. Der Ventilauslass 609 ist mit dem drucklosen Hydraulikfluidreservoir 170 fluidisch gekoppelt ist. Ferner steht der Druckeingang 602 fluidisch mit dem Hauptbremszylinder 110 in Verbindung. Der Druckeingang 602 mündet in eine erste Ventilbohrung 604, welche ein erstes Federelement 606 sowie einen Kolben 603 mit einem Dichtungselement 605 verschiebbar aufnimmt. Das Federelement 606 ist dazu ausgelegt, den Kolben 603 in Richtung des Druckeingangs 602 vorzuspannen. Der Ventileinlass 601 mündet in die erste Bohrung 604 an ihrem dem Druckeingang 602 abgewandten Ende. Der Kolben 603 weist im Bereich des Ventileinlasses 601 einen korrespondierenden ersten Fluiddurchlass 615 auf, um den Ventileingang 601 bei Betätigung des Kolbens nicht zu versperren. Das erste Dichtungselement 604 ist lateral zwischen dem Kolben 603 und der Ventilinnenwand 607 derart angeordnet, dass es jederzeit (also im unbetätigten und im betätigten Ventilzustand) den Druckeingang 602 vom Ventileinlass 601 fluidisch trennt.

Die erste Bohrung 604 mündet an ihrem dem Druckeingang 602 gegenüber liegenden Ende in eine zweite Bohrung 608. Die zweite Bohrung 608 nimmt ein Pfropfenförmiges Ventilelement 613 auf, welches einen zweiten Fluiddurchlass 614 und eine Bohrung zur Durchführung eines Ventilstößels 611 aufweist. Der Ventilstößel 611 ist an seinem dem Ventilauslass 609 zugewandtem Ende mit einem Verschlusselement 612 gekoppelt, welches in Anlage mit einer dem Ventilauslass zugewandten Stirnseite des Pfropfens 613 gebracht werden kann. Der Ventilstößel 611 ist ferner an seinem dem Ventilauslass 601 abgewandten Ende mit einem Federlagerungselement 610 versehen. Ein zwischen dem Federlagerungselement 610 und einer Rückseite des Pfropfens 613 eingespanntes zweites Federelement 616 bringt den Stößel 611 in Anlage mit dem Kolben 602. Gleichzeitig wird das Verschlusselement 612 an den Pfropfen 613 gedrückt, wodurch der zweite Fluiddurchlass 614 versperrt wird.

Im unbetätigten Zustand (Fig. 3A) kann kein Hydraulikfluid vom Ventileinlass 601 zum Ventilauslass 609 gelangen, da der zweite Fluiddurchlass 614 durch das mit dem Pfropfen 613 in Anlage befindliche Verschlusselement 612 versperrt ist. Das am Ventileinlass 601 und am zweiten Durchlass 609 aufgestaute Hydraulikfluid kann das Verschlusselement 612 nicht anheben und den Durchlass freischalten. Vielmehr fließt das Fluid über das erste Rückschlagventil 134 in den Hauptbremszylinder 110 bzw. in den Bremskreis 10.

Der im Hauptbremszylinder 110 erzeugte Druck wirkt direkt auf den Kolben 603, da dieser über den Druckeingang 602 mit dem Hauptbremszylinder 110 (bzw. mit dem ersten Bremskreis 10) fluidisch gekoppelt ist. Wird der im Hauptbremszylinder 110 erzeugte Druck genügend groß, so dass die am Kolben 603 wirkende Kraft (diese ist proportional zum anliegenden Druck und der dem Druck ausgesetzten Kolbenfläche) die Federkraft der ersten und zweiten Federeinrichtung 606, 615 übersteigt, so wird der Kolben 602 und der mit dem Kolben in Anlage gebrachte Ventilstößel 611 in Ventilauslassrichtung verschoben (nach links in Fig. 3B). Somit wird der zweite Fluiddurchlass 614 freigeschaltet und Hydraulikfluid kann nun über den ersten Fluiddurchlass 615 und den zweiten Fluiddurchlass 614 druckfrei in das drucklose Hydraulikfluidreservoir 170 abfließen (vgl. Pfeil in Fig. 3B, welcher den Fluidweg markiert). Das Ventil 136b wird allein durch den im Bremskreis 10 erzeugten Druck von einer geschlossenen in eine offene Ventilstellung geschaltet.

Insgesamt fungiert das druckgesteuerte Ventil 136 als Regelventil im Push-Through-Betrieb, welches festlegt, wie lange Hydraulikfluid aus dem Hydraulikzylinder 120 in den Bremskreis 10 eingespeist wird. Mit anderen Worten, kann über das druckgesteuerte Ventil 136 die Füllphase im Push-Through-Betrieb der Bremsanlage festgelegt werden. Ferner verhindert das Ventil 136, ein unnötiges Aufstauen von Hydraulikfluid am ersten Rückschlagventil 134, wenn beispielsweise während der Push-Through-Phase der im Hauptbremszylinder 110 erzeugte Druck sich an den im Hydraulikzylinder 120 erzeugten Druck annähert oder gar übersteigt.

Zurück zu Fig. 2. Das parallel zum zweiten Überdruckventil 136 und zum elektrisch betätigbaren Ventil 132 angeordnete dritte Rückschlagventil 138 ist derart angeordnet, dass sein Ventileinlass mit dem Ventilauslass des zweiten Rückschlagventils 136 und sein Ventilauslass mit dem Ventileinlass des elektrisch betätigbaren Ventils 132 fluidisch gekoppelt ist.

Das dritte Rückschlagventil 138 ist auf einen Überdruck von ungefähr 0.4 bar begrenzt. Es ist dazu ausgebildet, bei Rückbewegung des Bremspedals 126 (und somit bei einem Rückhub des Kolbens 122) ein Rückströmen von Hydraulikfluid vom drucklosen Hydraulikfluidreservoir 170 in den Hydraulikzylinder 120 zu ermöglichen. Beim Rückhub des Kolbens 120 kann bezogen zum drucklosen Hydraulikfluidreservoir 170 ein Unterduck im Fluidpfad 140 bzw. im Simulatorkreis 145 entstehen. Durch die Anordnung des dritten Rückschlagventils 138 kann im Rückhub Hydraulikfluid am elektrischen Ventil 132 vorbei direkt in den Fluidpfad 140 strömen. Da das dritte Rückschlagventil 138 im Vergleich zum elektrisch betätigbaren Ventil 132 einen großen Ventilquerschnitt aufweist, kann während einer Rückhubbewegung zügig Hydraulikfluid in den Hydraulikzylinder 120 zurückgeführt werden, um den Hydraulikzylinder 120 wieder mit Hydraulikfluid zu befüllen. Insbesondere kann somit ein Aufpumpen des Hydraulikdruckspeichers 144 bei mehreren schnell aufeinander folgenden kurzen Bremsbetätigungen im Push-Through-Betrieb vermieden werden. Über das dritte Rückschlagventil 138 kann auch ein Hydraulikfluidaustausch zwischen dem drucklosen Hydraulikfluidreservoir 170, dem Hydraulikzylinder 120 sowie der mit dem Hydraulikzylinder 120 fluidisch gekoppelten Simulatorkreis 145 während des Normalbetriebs der Bremsanlage 1000 erfolgen.

Unabhängig von den im zweiten Fluidpfad 140 angeordneten druckgesteuerten Ventilen 134, 136, 138 kann der durch den ersten Fluidpfad 340 und dem darin angeordneten Ventil 330 und dem zweiten Fluidpfad 140 und dem darin angeordneten elektrisch betätigbaren Ventil 132 (dieses ist mit dem Ventil 330 lediglich über den Simulatorkreis fluidisch gekoppelt) ein Fluidkreis realisiert werden, welcher, beginnend vom Hauptbremszylinder 110, über den ersten Fluidpfad 340, über den Simulatorkreis 145 und über den zweiten Fluidpfad 130 zum Hydraulikfluidreservoir 170 reicht. Dieser Fluidkreis, bildet einen "Testkreis" für die Bremsanlage 1000, welcher zum automatischen Überprüfen des Simulatorkreises 145 und/oder zum Überprüfen des im Testkreis angeordneten Druckventils herangezogen werden kann. Ferner kann der Testkreis zum automatischen Entlüften der Bremsanlage 1000b oder mindestens zum automatischen Entlüften von Teilen der Bremsanlage 1000b herangezogen werden, wie anhand der nachfolgenden Fign. 4-12B ausführlicher beschrieben wird.

Die in Fig. 2 gezeigte Bremsanlage 1000b umfasst ferner einen im Hauptbremszylinder 110 oder im ersten Bremskreis 10 angeordneten Sensor 2000 zur Erfassung des Druckes in dem Hauptbremszylinder 110 oder in dem Bremskreis 10, einen im Simulatorkreis 145 angeordneten Sensor 2002 zur Bestimmung des Druckes im Simulatorkreis 145, einen in der Pedalschnittstelle 115 angeordneten Weg- und/oder Kraftsensor 2004 zur Bestimmung der Bremspedalbetätigung im Bremsbetrieb sowie wenigstens einen am Aktuator 160 angeordneten Sensor 2006 zur Bestimmung der Aktuatorbetätigung. Der Sensor 2006 kann einen Motorparameter, wie beispielsweise die Motorstellung während der Betätigung erfassen. Aus der Motorstellung und dem bekanntem Übersetzungsverhältnis der dem Motor 161 nachgeschalteten Mutter-Spindel-Anordnung 162, 163 kann die Betätigung (also Verschiebung) des Primärkolbens 112 erfasst werden. Alternativ hierzu kann auch ein Wegsensor zur direkten Messung der Spindelverschiebung bei einer Aktuatorbetätigung vorhanden sein, um daraus die durch den Aktuator 160 bewirkte Verschiebung des Primärkolbens 112 und des Sekundärkolbens 114 zu erfassen. Aus der Verschiebung der Kolbenanordnung 112, 114 kann wiederum das aus dem Hauptbremszylinder 110 verdrängte Hydraulikfluidvolumen berechnet werden.

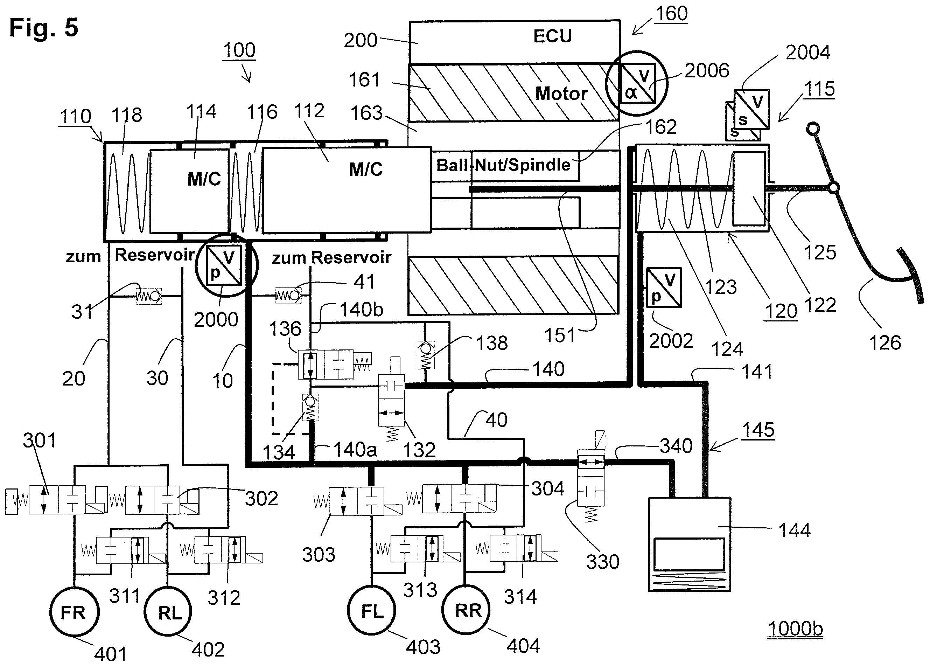

Anhand der Fign. 4 und 5 wird nun ein automatisches Testverfahren zum Überprüfen der Funktionsfähigkeit der in den Fign. 1A/1B und 2 gezeigten elektrohydraulischen Fahrzeug-Bremsanlagen 1000, 1000a, 1000b beschrieben. Konkret wird ein Testverfahren zum Überprüfen des Simulatorkreises 145 beschrieben. Fig. 4 zeigt ein Flussdiagramm, welches den Ablauf des Verfahrens verdeutlicht. Fig. 5 zeigt anhand der in Fig. 2 dargestellten Bremsanlage 1000b die Ventilstellungen sowie die Strömungsverhältnisse des Hydraulikfluids in der Bremsanlage 1000b.

Das automatische Testverfahren wird mit Hilfe des oben beschriebenen Testkreises implementiert. Das Testverfahren kann anhand von Steuerroutinen in der ECU 200 hinterlegt sein, welche die Abfolgeschritte der Ansteuerung der Ventile und der Betätigung des elektromechanischen Aktuators 160 umfasst.

Das Verfahren wird während einer Bremsbetrieb-freien Phase der Bremsanlage 1000, 1000a, 1000b durchgeführt. Die Ventile 130, 301-304, 330 der ersten, zweiten und dritten Ventileinrichtung sind in dieser Konfiguration anfänglich noch unbetätigt. Konkret befindet sich das Ventil 330 der ersten Ventileinrichtung in einer geschlossenen Ventilstellung, das Ventil 130 der zweiten Ventileinrichtung in einer geöffneten Ventilstellung und die Ventile 301-304 der dritten Ventileinrichtung jeweils in einer geöffneten Ventilstellung, so wie in Fig. 2 veranschaulicht.

In einem ersten Schritt S10 wird zunächst das Ventil 330, welches im ersten Fluidpfad 340 angeordnet ist, elektrisch betätigt und somit von einem geschlossenen Ventilzustand in einen geöffneten Ventilzustand geschaltet. Auf diese Weise wird der Pedalsimulatorkreis 145 sowie die Pedalschnittstelle 150 fluidisch mit dem Hydraulikdruckerzeuger der Bremsanlage (1000, 1000a, 1000b) gekoppelt. In den hier beschriebenen Ausführungsformen der Fign. 1A und 1B wird der Hydraulikdruckerzeuger durch den Hauptbremszylinder 110, die im Hauptbremszylinder 110 aufgenommene Kolbenanordnung 112, 114 sowie durch den auf den Primärkolben 112 einwirkenden Aktuator 160 (Fig. 1A) bzw. durch die Zylinder-Kolben-Einrichtung 701, 702 und den auf die Zylinder-Kolben-Einrichtung 701, 702 einwirkenden Aktuator 160 (Fig. 1B) realisiert. Alternativ kann der Hydraulikdruckerzeuger auch durch ein Zylinder-Kolben-System realisiert sein, wie beispielsweise in der WO 2011/141158 A2 beschrieben.

In einem zweiten Schritt S20 wird ferner das im zweiten Fluidpfad 130 angeordnete elektrisch betätigbare Ventil 130 von einer geöffneten Ventilstellung in eine geschlossenen Ventilstellung geschaltet. Dadurch wird der Simulatorkreis 145 und die Pedalschnittstelle 150 vom Hydraulikfluidreservoir 170 fluidisch entkoppelt.

Sofern sich die Ventile 301-304 der dritten Ventileinrichtung in einem geöffneten Zustand befinden, werden diese in einem dritten Schritt S30 jeweils von einer geöffneten Ventilstellung in eine geschlossene Ventilstellung geschaltet. Somit werden die Radbremsen 401-404 vom Hauptbremszylinder 110 fluidisch entkoppelt, so dass bei Betätigung des Aktuators 160 kein Hydraulikfluid in die Radbremsen 401-404 strömen kann. Die Radbremsen 401-404 bleiben während des Testverfahrens vom Hauptbremszylinder 110 fluidisch entkoppelt.

Die hier beschriebenen Betätigungsschritte S10 bis S30 können gleichzeitig erfolgen oder nacheinander in der oben beschriebenen Reihenfolge oder in einer anderen Reihenfolge durchgeführt werden. Die beschriebene Betätigung der Ventile 130, 301-304, 330 ist auch in Fig. 5 dargestellt.

In einem darauffolgenden vierten Schritt S40 wird nun der elektromechanische Aktuator 160 betätigt, um Hydraulikfluid aus dem Hydraulikdruckerzeuger in den Simulatorkreis zu verschieben.

In der in den Fign. 1A und 2 dargestellten Bremsanlage verschiebt der elektromechanische Aktuator 160 den Primärkolben 112 und den damit gekoppelten Sekundärkolben 114 des Hauptbremszylinders 110 in Fahrtrichtung (vgl. Verschiebung nach links in Fig. 5), wodurch Hydraulikfluid aus den beiden Kammern 116, 118 in die Bremskreise 10, 20 verschoben werden kann. Die Strömung des aus dem Hauptbremszylinder 110 verdrängten Hydraulikfluids in der Bremsanlage 1000b ist in Fig. 5 mit Hilfe der dick markierten Fluidpfade dargestellt. Das während der Aktuatorbetätigung aus dem Hauptbremszylinder 110 verdrängte Hydraulikfluid kann aufgrund der geschlossenen Ventile 301-304 nicht an die Radbremsen 401-404 gelangen. Es strömt vielmehr über den ersten Bremskreis 10 und über den ersten Fluidpfad 340 in den Hydraulikdruckspeicher 144, wodurch dieser mit dem aus dem Hauptbremszylinder 110 geförderten Hydraulikfluid gefüllt wird. Da das Ventil 130 im zweiten Fluidpfad 140 geschlossen ist kann auch kein Fluid über den zweiten Fluidpfad 140 in das Hydraulikfluidreservoir 170 abfließen.

Gleichzeitig zur Betätigung des elektromechanischen Aktuators 160 wird der im Hauptbremszylinder 110 oder im Zylinder 701 anliegende Hydraulikdruck am Hauptbremszylinder 110 über den Sensor 2000 erfasst (fünfter Schritt S50). Im Idealfall, wenn der Simulatorkreis 145 keine komprimierbare Luft enthält, entspricht der im Hydraulikdruckerzeugerwährend der Aktuatorbetätigung aufgebaute Hydraulikdruck dem durch Verschiebung des vorgespannten Kolbens im Hydraulikdruckspeicher 144 erzeugten Gegendruck. Es kann somit die Druck-Charakteristik des Hydraulikdruckspeichers 144 überprüft werden. Befindet sich im Simulatorkreis Luft, so kann der Druckanstieg aufgrund der Kompressibilität der Luft von einem erwarteten Druckanstieg abweichen. Die Abweichung ist dabei ein Maß für das Entlüftungsniveau des Simulatorkreises 145.

Um den Simulatorkreis 145 testen zu können, wird ferner in einem weiteren sechsten Schritt S60 das während der Betätigung der Kolben 112, 114, 702 aus dem Hydraulikdruckerzeuger verschobene Hydraulikfluid durch den Sensor 2006 erfasst. Die Erfassung des Fluidvolumens erfolgt hierbei im Wesentlichen gleichzeitig zur Erfassung des Hydraulikdrucks. Die Erfassung des verdrängten Fluidvolumens kann aus einer erfassten Motorstellung, aus dem Übersetzungsverhältnis des Mutter-Spindel-Getriebes und aus dem Zyklinderdurchmesser des Hydraulikdruckerzeugers bestimmt werden. Alternativ kann direkt der Betätigungsweg des Kolbens 112, 702 des Hydraulikdruckerzeugers durch einen Wegsensor im Hydraulikdruckerzeuger oder durch einen im Mutter-Spindel-Getriebe angebrachten Wegsensor gemessen werden und aus dem Betätigungsweg und dem Zylinderdurchmesser des Hydraulikdruckerzeugers (aus dem in bekannter Weise die Zylindergrundfläche des Hydraulikdruckerzeugers ermittelt werden kann) das verdrängte Fluidvolumen ermittelt werden. Die Erfassung von Druck und verdrängtem Volumen kann kontinuierlich oder schrittweise in vorgegebenen Zeitintervallen erfolgen. Aus den erfassten Messwert-Tupeln "Druck" und "Fluidvolumen" kann der Druckanstieg in Abhängigkeit des in den Simulatorkreis 145 geförderten Fluidvolumens bestimmt werden.

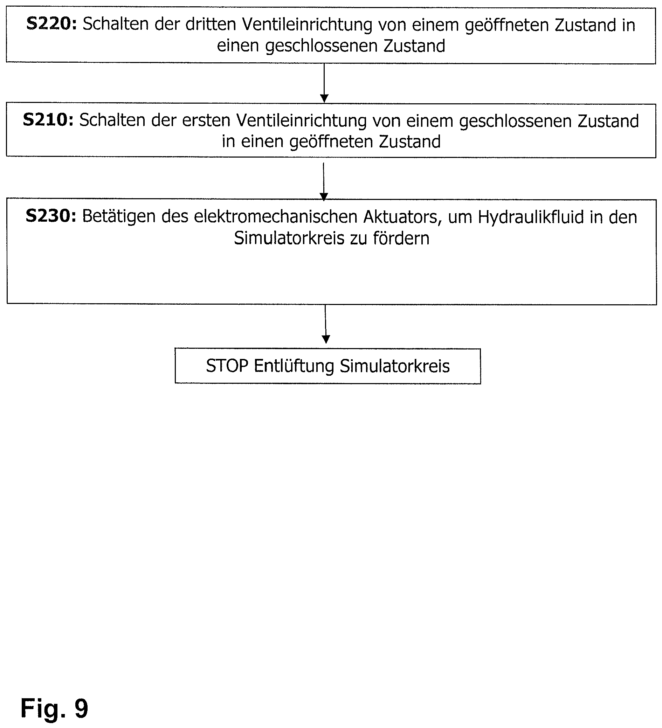

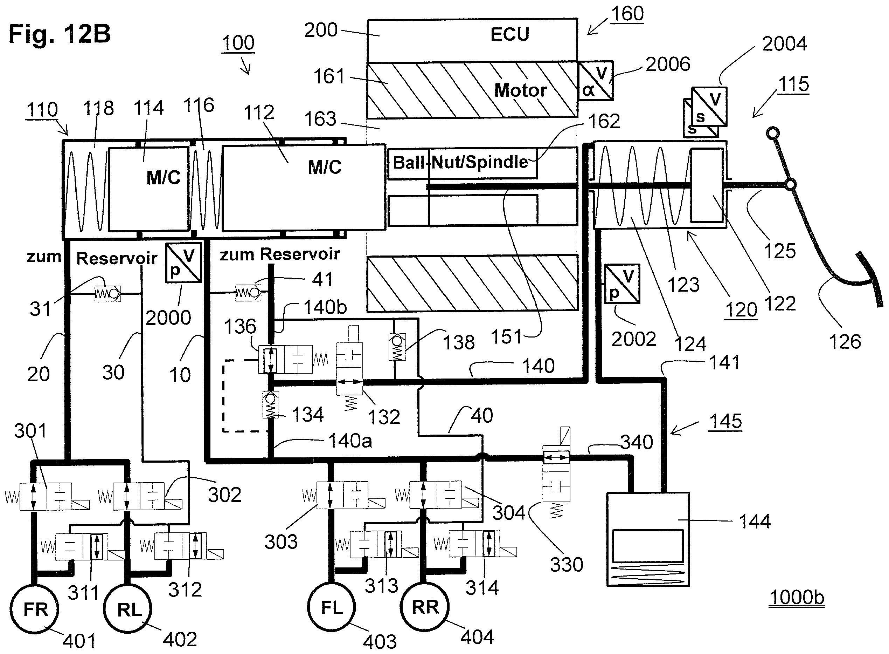

Die so gewonnene Druck-Volumen-Charakteristik kann dann in einem abschließenden siebten Schritt S70 mit einer hinterlegten Druck-Volumen-Charakteristik verglichen werden. Anhand möglicher Abweichungen der erfassten Druck-Volumen-Charakteristik von der hinterlegten Charakteristik kann der Entlüftungsgrad des Simulatorkreises 145 bestimmt werden. Liegt beispielsweise der Druckanstieg bei Verschiebung eines Hydraulikfluidvolumens während des Tests hinter dem zu erwartenden Druckanstieg zurück, so kann daraus der Luftanteil im Simulatorkreis und damit der Entlüftungsgrad des Simulatorkreises 145 ermittelt werden. Abhängig vom Ergebnis kann dann eine Entlüftung des Simulatorkreises durchgeführt werden. Ein Entlüftungsverfahren wird nachstehend in Zusammenhang mit den Fign. 9 und 12B beschrieben.

Sofern sichergestellt ist, dass der Simulatorkreis 145 hinreichend entlüftet ist, kann auch die Kolben-Feder-Anordnung im Hydraulikdruckspeicher 144 selbst getestet werden. Der im Hydraulikdruckerzeuger erfasste Gegendruck ist proportional zur Federkraft und zum Verschiebungsweg der Feder-Kolben-Anordnung. Abweichungen in der Druck-Volumen-Charakteristik können auf eine verminderte Federkraft und damit auf Verschleißerscheinungen des Hydraulikdruckspeichers 144 hinweisen.

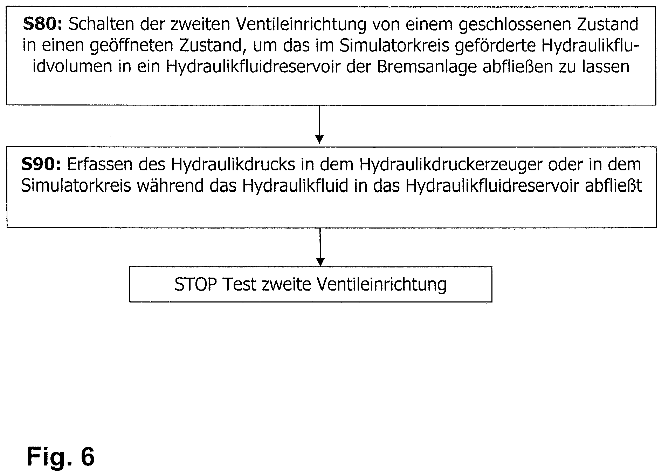

Ist erst einmal ein erfasstes Fluidvolumen im Rahmen des oben beschriebenen Simulatorkreistests in den Simulatorkreis 145 gefördert worden, so kann in einem weitern Test die Strömungseigenschaften des im zweiten Fluidpfad 140 angeordneten elektrisch betätigbaren Ventils 132 getestet werden. Das entsprechende Flussdiagramm ist in Fig. 6 gezeigt.

Das Verfahren zum Testen der Strömungseigenschaften des Ventils 132 kann im Anschluss des Simulatorkreistests erfolgen. In diesem Zusammenhang wird in einem achten Schritt S80 das Ventil 132 in eine geöffnete Ventilstellung geschaltet. Das im Simulatorkreis 145 aufgestaute Hydraulikfluid kann dann über den mit dem Simulatorkreis 145 fluidisch gekoppelten Hydraulikzylinder 120 der unbetätigten Pedalschnittstelle 115, den zweiten Fluidpfad 140 und über das geöffnete Ventil 132 in das drucklose Hydraulikfluidreservoir 170 abströmen. Da der zum vollständigen Füllen des Hydraulikdruckspeichers 144 aufgebaute Hydraulikdruck im Hydraulikdruckerzeuger wesentlich höher ist als der zum Freischalten des druckgesteuerten Überdruckventils 136 benötigte Schaltdruck von 10 bar, befindet sich das dem elektrisch betätigbaren Ventil 132 nachgeordnete druckgesteuerte Überdruckventil 136 in einer geöffneten Stellung, so dass das Fluid in das Hydraulikfluidreservoir 170 strömen kann.

Während des Zurückströmens des Fluids in das Hydraulikfluidreservoir 170 wird der im Simulatorkreis 145 bzw. im Hydraulikdruckerzeuger abfallende Hydraulikdruck erfasst (Schritt S90). Da das in den Simulatorkreis 145 verschobene Hydraulikfluidvolumen bekannt ist, kann aus der zeitlichen Erfassung des Druckabfalls im Hauptbremszylinder 110 bestimmt werden, wie viel Fluid über das Ventil 132 pro Zeiteinheit abströmt. Mit anderen Worten ist der gemessene zeitliche Abfall des Druckes (Druckabfallrate) ein Maß dafür, wie viel Fluidvolumen pro Zeiteinheit durch den Ventilquerschnitt des Ventils 132 strömt. Auf diese Weise kann die Funktionsfähigkeit des Ventils 132 in dem zweiten Fluidpfad 140 überprüft werden.

Das Testverfahren zum Bestimmen der Strömungseigenschaften des Ventils 132 kann auch unabhängig vom Simulatorkreistest durchgeführt werden. In einem derartigen Fall werden die Ventile 130, 301-304, 340 der ersten, zweiten und dritten Ventileinrichtung betätigt, so wie in den Schritten S10, S20, S30 beschrieben. Danach wird der Aktuator 160 betätigt, um ein Fuidvolumen in den Simulatorkreis 145 zu fördern (Schritt S40). Das geförderte Fluidvolumen wird gemäß Schritt S60 bestimmt. Anschließend wird das Ventil 132 geöffnet und der Druckabfall im Hydraulikdruckerzeuger erfasst (Schritte S80 und S90).

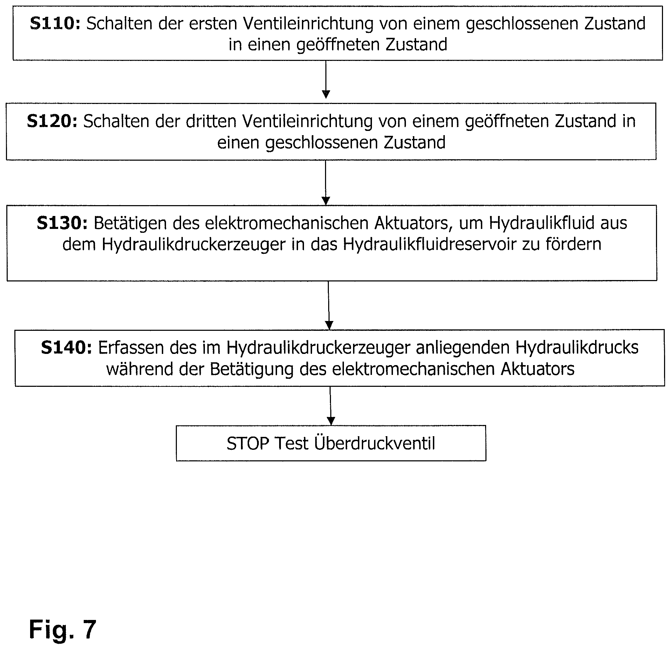

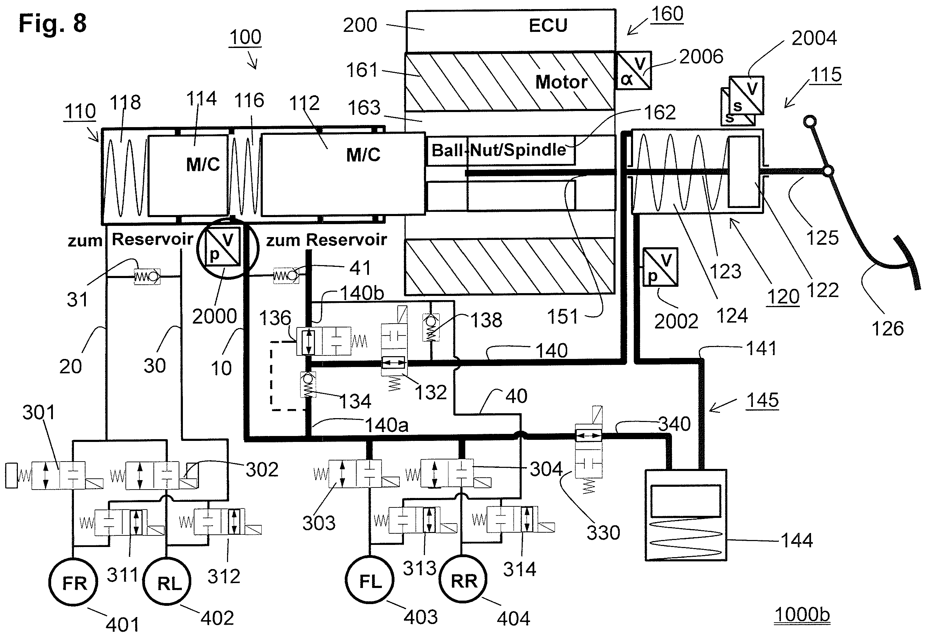

Es wird nun mit Hilfe der Fign. 7 und 8 ein weiteres Testverfahren zum Bestimmen des Schaltdruckes des druckgesteuerten Überdruckventils 136 erklärt. Fig. 7 zeigt ein Flussdiagramm, welches die Verfahrensschritte des Testverfahrens illustriert. Fig. 8 zeigt die Schaltung der Ventile 130, 301-304, 330 und den Strömungsverlauf anhand der in Fig. 2 dargestellten Bremsanlage 1000b.

Wie bereits in Zusammenhang mit Fig. 2 beschrieben, sind das druckgesteuerte Überdruckventil 136 und das Rückschlagventil 134 im zweiten Fluidpfad 140 angeordnet, um ein druckgesteuertes Einspeisen von Hydraulikfluid aus dem Hydraulikzylinder 120 in die Bremskreise 10, 20 der Bremsanlage 1000b während des Push-Through-Betriebs zu ermöglichen.

Zur Bestimmung des Schaltdrucks des druckgesteuerten Überdruckventils 136 wird in einem ersten Schritt S110 das Ventil 330 von einer geschlossenen Ventilstellung in eine geöffnete Ventilstellung geschaltet. Das Ventil 132 bleibt unbetätigt und somit in einer geöffneten Ventilstellung. Sollte das Ventil 132 vor Durchführung des Tests sich in einer geschlossenen Ventilstellung befinden, so wird das Ventil in eine geöffnete Ventilstellung geschaltet.

In einem darauffolgenden zweiten Schritt S120 werden ferner die Ventile 301-304 der dritten Ventileinrichtung betätigt und in eine geschlossene Ventilstellung geschaltet. Somit sind die Radbremsen 401-404 während des Tests vom Hauptbremszylinder 110 fluidisch entkoppelt. Die Entkopplung der Radbremsen 401-404 während des Tests ist nötig, damit kein Hydraulikfluid in die Radbremsen 401-404 gelangt. Würde während des Tests Hydraulikfluid zusätzlich an die Radbremsen 401-404 gelangen, so könnte aufgrund der dann erfolgenden Betätigung der Radbremsen 401-404 der Schaltdruck des Überdruckventils 136 nicht zuverlässig bestimmt werden. Die Schritte S110, S120 können wiederum gleichzeitig oder nach einer vorgegebenen zeitlichen Abfolge durchgeführt werden.

In einem darauffolgenden dritten Schritt S130 wird dann der elektromechanische Aktuator 160 betätigt, der die Kolbenanordnung 112, 114 im Hauptbremszylinder 110 bzw. den Kolben 702 im Zylinder 701 in Fahrtrichtung verschiebt, um Hydraulikfluid aus dem Hydraulikdruckerzeuger in das Hydraulikfluidreservoir zu fördern.

In der in Fig. 2 dargestellten Bremsanlage gelangt das bei Betätigung des elektromechanischen Aktuators 160 gefördert Hydraulikfluid zunächst in die Bremskreise 10, 20. Aufgrund der geschlossenen Ventile 301-304 kann das aus den Kammern 116, 118 verdrängte Hydraulikfluid lediglich über den ersten Fluidpfad 340 und das geöffnete Ventil 330 in den Hydraulikfluidspeicher 144 verschoben werden. Vom Hydraulikdruckspeicher 144 kann das Hydraulikfluid über die Pedalschnittstelle 115 in den zweiten Hydraulikfluidpfad 140 gelangen. Das in den zweiten Hydraulikpfad 140 geförderte Hydraulikfluid kann ferner über das zweite Ventil 132 an die Eingänge der Ventile 134, 136 gelangen. Am Rückschlagentil 134 liegt im vorliegenden Testverfahren annähernd derselbe Hydraulikdruck an wie im Hauptbremszylinder 110. Es bleibt somit geschlossen. Das druckgesteuerte Überdruckventil 136 ist anfänglich ebenso geschlossen. Das aus dem Hauptbremszylinder 110 geförderte Fluid staut sich somit im Testkreis (erster Fluidpfad 340, Simulatorkreis 145, zweiter Fluidpfad 140) auf.

Mit zunehmender Aktuatorbetätigung steigt der Druck im Hauptbremszylinder 110 und im Testkreis kontinuierlich an. Der zeitliche Anstieg des Drucks wird in einem weiteren Schritt S140 am Hauptbremszylinder durch den Sensor 2000 (oder im Testkreis durch den Sensor 2002) erfasst.

Das Ventil 136 schaltet genau dann in eine geöffnete Ventilstellung (vgl. Fig. 8), wenn der im Hauptbremszylinder 110 anliegende Hydraulikdruck den Schaltdruck des Ventils 136 erreicht hat (also 10 bar). Sobald das Überdruckventil 136 von der geschlossenen Ventilstellung in die geöffnete Ventilstellung übergeht, kann das an den Einlässen der Ventile 134, 136 zurückgestaute Hydraulikfluid über das geöffnete Ventil 136 und den Teilpfad 140b in das Fluidreservoir 170 abfließen. Nach der Öffnung des Ventils 136 wird bei weiterer Verschiebung der Kolbenanordnung 112, 114 der Hydraulikdruck in dem Hauptbremszylinder 110 bzw. im Simulatorkreis 145 nur noch unwesentlich erhöht. Diese Abflachung des Druckes nach Erreichen eines bestimmten Druckniveaus im Hauptbremszylinder kann durch den Sensor 2000 detektiert werden. Sie ist ein Maß für den Schaltdruck des druckgesteuerten Überdruckventils 136.

Durch Aufnahme des Druckes während der Betätigung des elektromechanischen Aktuators 160 (vgl. Fig. 8, in welcher die Druckerfassungseinrichtung 2000 eingekreist ist) kann somit der Schaltdruck bestimmt werden, bei dem das druckgesteuerte Ventil 136 von einer geschlossenen Ventilstellung in eine geöffnete Ventilstellung schaltet. Insbesondere kann durch den beschriebenen Test auch die Dichtigkeit des druckgesteuerten Überdruckventils 136 geprüft werden. Beispielsweise kann bei einem undichten Ventil 136 Hydraulikfluid aus dem ersten Bremskreis 10 oder dem Hauptbremszylinder 110 über einen Steuerkanal (gestrichelte Linie am Ventil 136 in Fig. 8) und über das Ventil 136 direkt in das Hydraulikfluidreservoir 170 abfließen, wodurch ein Druckaufbau im Bremskreis 10 erheblich behindert werden würde.

Die hier beschriebenen Testverfahren werden jeweils während einer bremsbetrieb-freien Phase durchgeführt. Gemäß einer Implementierung können die hier beschriebenen Testverfahren dann durchgeführt werden, wenn das Kraftfahrzeug sich in einem Stillstand befindet. Dies kann beispielsweise dann der Fall sein, wenn das Fahrzeug abgestellt ist oder wenn sich das Fahrzeug während einer Fahrt in einer Ruheposition befindet (z.B. an einer Ampel). Wird in diesem Zusammenhang eine Bewegung des Fahrzeuges detektiert und wird gerade ein Testverfahren durchgeführt, so wird das Testverfahren unterbrochen bzw. abgebrochen, um die Betriebsfähigkeit der Bremsanlage 1000b nicht zu beeinflussen. Die beschriebenen Testverfahren laufen ferner vollautomatisch ab. Sie können in regelmäßigen Zeitabständen wiederholt werden, oder aber auf Wunsch des Fahrers durchgeführt werden.

Der in Zusammenhang mit den Fign. 1A, 1B und 2 beschriebene Testkreis kann auch zur Entlüftung der Bremsanlage 1000, 1000a, 1000b oder zur Entlüftung von Teilen der Bremsanlage 1000, 1000a, 1000b eingesetzt werden. Im Folgenden wird nun anhand von zwei Beispielen die automatische Entlüftung der in den Fign. 1A und 2 gezeigten Bremsanlage 1000, 1000b bzw. des Simulatorkreises 145 beschrieben, welche mit Hilfe der Hydraulikdruckerzeuger-Baugruppe 100 fahrerunabhängig und somit vollautomatisch durchgeführt werden kann.

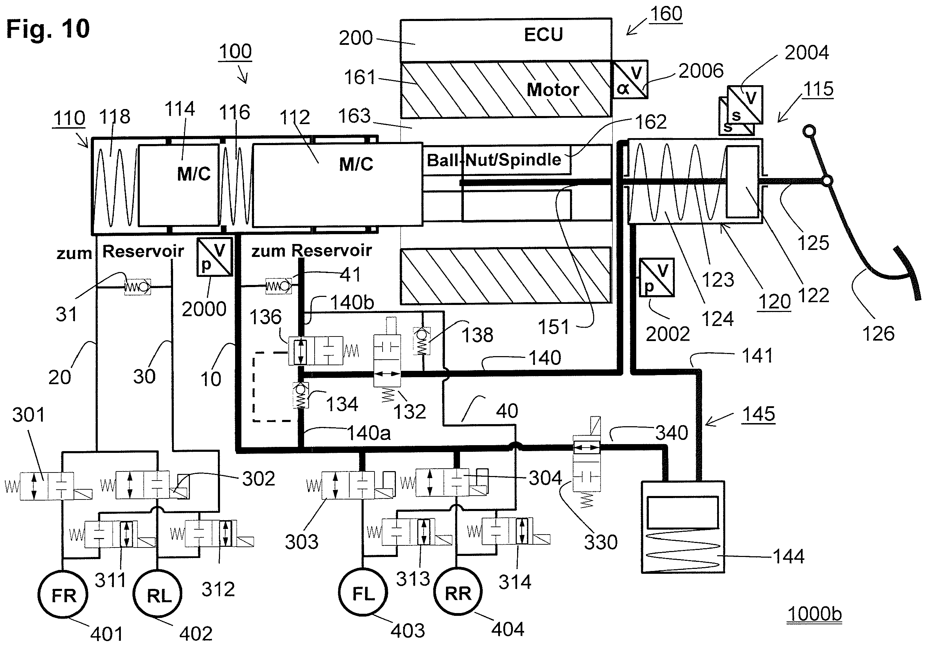

In den Fign. 9 und 10 wird ein erstes Ausführungsbeispiel einer Entlüftung des Simulatorkreises 145 gezeigt. In Fig. 9 wird ein entsprechendes Flussdiagramm des automatischen Entlüftungsverfahrens gezeigt. In Fig. 10 sind die Ventilschaltungen sowie der Strömungsverlauf des Hydraulikfluids anhand der in Fig. 2 dargestellten Bremsanlage 1000b während des Enlüftungsverfahrens gezeigt.

In einem ersten Schritt S210 wird zunächst die dritte Ventileinrichtung 301-302 in eine geschlossene Ventileinstellung geschaltet, um die den Ventileinrichtungen 301-304 zugeordneten Radbremsen 401-404 vom Hauptbremszylinder 110 (oder im Falle der Hydraulikdruckerzeuger-Baugruppe gemäß WO 2011/141158 A2 von der Zylinder-Kolbenanordnung zur Hydraulikdruckerzeugung) hydraulisch zu entkoppeln.

In einem darauffolgenden zweiten Schritt S220 wird das im ersten Hydraulikfluidpfad 340 angeordnete Ventil 330 geöffnet, um den Hauptbremszylinder 110 mit dem Simulatorkreis 145 fluidisch zu koppeln. Ferner wird das im zweiten Hydraulikfluidpfad 140 angeordnete Ventil 132 in eine geöffnete Ventilstellung gebracht, sofern dieses Ventil sich nicht schon in der geöffneten Ventilstellung befindet. Die Schaltung der Ventile 301-304, 340 und, optional des Ventils 132, kann durch die ECU 200 gleichzeitig bzw. zeitlich nacheinander erfolgen.

In einem darauffolgenden dritten Schritt S230 wird nun der elektromechanische Aktuator 160 betätigt, um Hydraulikfluid aus dem Hydraulikdruckerzeuger zu fördern. In der in Fig. 2 gezeigten Variante der Bremsanlage betätigt der Aktuator 160die Kolbenanordnung 112, 114 des Hauptbremszylinders 110. Durch Verschiebung der Kolbenanordnung 112, 114 des Hauptbremszylinders 110 kann Hydraulikfluid nur aus der ersten Kammer 116 des Hauptbremszylinders 110 über den ersten Bremskreis 10 sowie über den ersten Fluidpfad 340 und über das geöffnete Ventil 330 in den Simulatorkreis 145 abströmen. Mit zunehmender Verschiebung der Kolbenanordnung 112, 114 steigt der Druck im Testkreis und im Hauptbremszylinder 110 weiter an. Sobald der Schaltdruck des druckgesteuerten Ventils 136 (10 bar) erreicht ist, schaltet das Ventil 136 in eine geöffnete Ventilstellung 136. Das in den Simulatorkreis 145 geförderte Hydraulikfluid kann dann über den Fluidpfad 141 des Simulatorkreises 145, über den Hydraulikzylinder 120 der unbetätigten Bremspedalschnittstelle 115 und über die im zweiten Fluidpfad 140 geöffneten Ventile 132 und 136 zurück in das Hydraulikfluidreservoir 170 (und somit in den mit dem Hydraulikfluidreservoir 170 gekoppelten Hauptbremszylinder 110) strömen. Auf diese Weise kann neues Hydraulikfluid in den Simulatorkreis 145 und in die Pedalschnittstelle 115 gefördert werden ohne dass hierfür eine Betätigung des Bremspedals 126 notwendig ist.

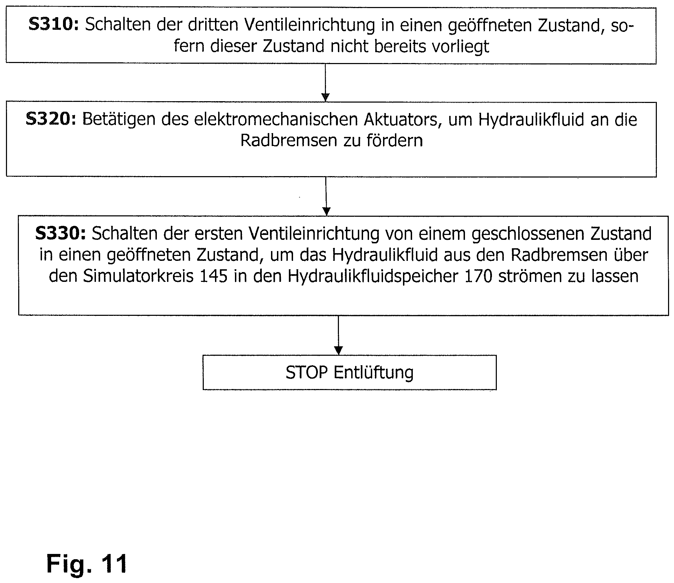

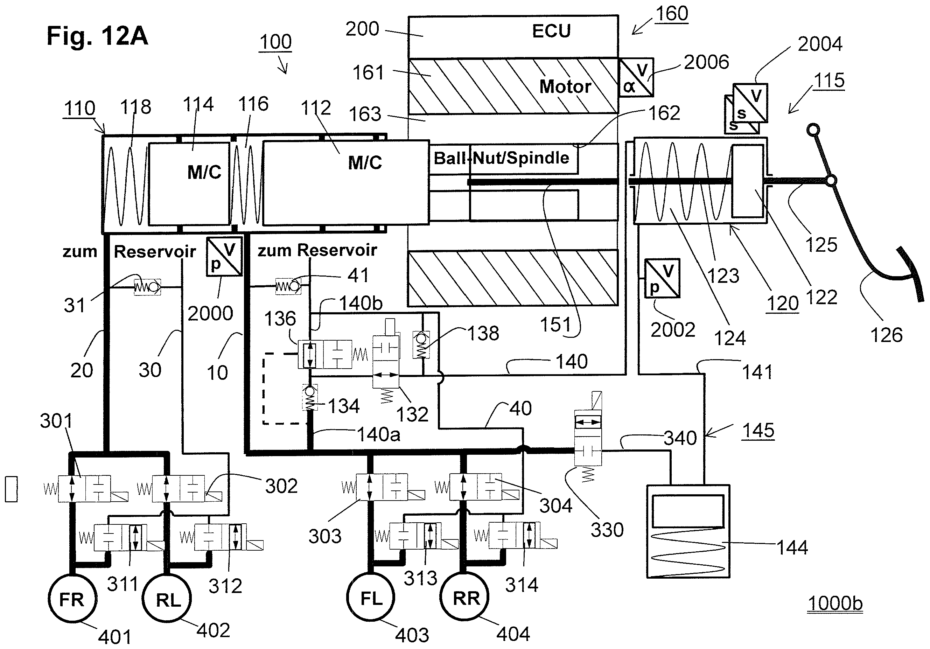

Gemäß einer alternativen Entlüftungsvariante, welche in den Fign. 11, 12A und 12B dargestellt ist, nimmt das Hydraulikfluid den folgenden Strömungsverlauf in der Bremsanlage 1000b.

Zunächst werden die Ventile 301-304 der dritten Ventileinrichtung in eine geöffnete Ventilstellung geschaltet, sofern diese sich nicht schon in einer geöffneten Ventilstellung befinden (erster Schritt 310). Ferner bleibt das im ersten Hydraulikfluidpfad 340 angeordnete Ventil 320 zunächst unbetätigt und somit in einer Sperrstellung.

Danach wird der Aktuator 160 betätigt (Schritt 320), um Hydraulikfluid aus dem Hauptbremszylinder 110 in die Radbremsen 401-404 der beiden Bremskreise 10, 20 zu fördern (vgl. Fig. 12A, wo der Verlauf des verdrängten Hydraulikfluids durch dicke Markierung der Fluidpfade dargestellt ist). Das aus dem Hauptbremszylinder 110 verdrängte Hydraulikfluid kann zunächst nur an die Radbremsen 401-404 gelangen, welche aufgrund des geförderten Hydraulikfluids betätigt werden. Das Ventil 136 ist aufgrund des im Hauptbremszylinder 110 anliegenden Druck bereits in eine geöffnete Stellung geschaltet. Das in die Radbremsen 401-404 verschobene Hydraulikfluid kann jedoch noch nicht in das Hydraulikfluidreservoir 170 abströmen, da das Ventil 330 im ersten Fluidpfad 340 noch geschlossen ist.

Anschließend wird das Ventil 330 in eine geöffnete Ventilstellung geschaltet (Schritt 330), um das Hydraulikfluid aus den Radbremsen 401-404 über die beiden Bremskreise 10, 20 und über den ersten Fluidpfad 340 in den Hydraulikdruckspeicher 144 strömen zu lassen (vgl. Fig. 12B, der Hydraulikdruckspeicher 144 wird gefüllt). Von dort fließt das Hydraulikfluid über den Fluidpfad 141 und den Hydraulikzylinder 120 der unbetätigten Pedalschnittstelle 115 zum zweiten Fluidpfad 140. Über den zweiten Fluidpfad 140 und über die geöffneten Ventile 132 und 136 kann das aus dem Hauptbremszylinder 110 verdrängte Hydraulikfluid zurück in das Fluidreservoir 170 abfließen.

Insgesamt wird durch die hier beschriebene Bremsanlage 1000, 1000a, 1000b ein Testkreis realisiert, der zum automatischen Entlüften der Bremsanlage 1000 und zum Testen von Ventilen in der Bremsanlage 1000 vorgesehen ist. Der Testkreis besteht im Wesentlichen aus zwei zueinander verschiedenen Hydraulikfluidpfaden (der oben beschriebene erste Fluidpfad 340 und zweite Fluidpfad 140), welche den Simulatorkreis 145 einerseits mit dem Hydraulikfluidreservoir 170 und andererseits mit einem Hydraulikdruckerzeuger (in den hier beschriebenen Ausführungsbeispielen mit dem Hauptbremszylinder 110) fluidisch koppeln. Das vorliegende Testkreis-Design ist in modernen Bremsanlagen, die nach dem Brake-by-Wire-Prinzip arbeiten, leicht integrierbar, da sie häufig bereits einen hydraulischen Simulatorkreis und eine Fluidverbindung zu dem Hydraulikfluidreservoir 170 aufweisen. Es muss lediglich ein weiterer Fluidpfad mit einer Ventileinrichtung in die Bremsanlage 1000, 1000a, 1000b implementiert werden, um den Hydraulikdruckerzeuger der Bremsanlage 1000, 1000a, 1000b mit dem Simulatorkreis fluidisch zu koppeln.

## Patentansprüche

1. Elektrohydraulische Kraftfahrzeug-Bremsanlage (1000, 1000a, 1000b), umfassend:
- einen hydraulischen Simulatorkreis (145) zur Erzeugung einer Pedalrückwirkungskraft;
- eine erste Zylinder-Kolben-Einrichtung (110, 112, 114, 701, 702) und einen auf die erste Zylinder-Kolben-Einrichtung (110, 112, 114, 701, 702) einwirkenden elektromechanischen Aktuator (160) zur Erzeugung eines Hydraulikdrucks in wenigstens einem Bremskreis (10, 20);
- einen ersten Fluidpfad (340) mit einer darin angeordneten ersten Ventileinrichtung (330) zur wahlweisen fluidischen Kopplung der ersten Zylinder-Kolben-Einrichtung (110, 112, 114, 701, 702) mit dem Simulatorkreis (145); und
- einen zweiten Fluidpfad (140) mit einer darin angeordneten zweiten Ventileinrichtung (130) zur wahlweisen fluidischen Kopplung des Simulatorkreises (145) mit einem drucklosen Hydraulikfluidreservoir (170),
- wenigstens eine erste Erfassungseinrichtung (2000), welche dazu ausgelegt ist, einen durch Betätigung des elektromechanischen Aktuators (160) aufgebauten Hydraulikdruck zu erfassen,
**dadurch gekennzeichnet, dass** die Kraftfahrzeug-Bremsanlage (1000, 1000a, 1000b) ferner wenigstens eine zweite Erfassungseinrichtung (2006) umfasst, welche dazu ausgelegt ist, ein durch Betätigung des elektromechanischen Aktuators (160) verschobenes Hydraulikfluidvolumen zu erfassen, und eine Vergleichseinrichtung, welche dazu ausgebildet ist, beide erfassten Messgrößen mit einer vorgegebenen Druck-Volumen-Charakteristik zu vergleichen.

2. Elektrohydraulische Kraftfahrzeug-Bremsanlage (1000, 1000a) nach Anspruch 1, ferner umfassend wenigstens einen hydraulischen Bremskreis (10, 20), wobei der wenigstens eine Bremskreis (10, 20) mit der ersten Zylinder-Kolben-Einrichtung (110, 112, 114, 701, 702) fluidisch gekoppelt ist, und optional, wobei der Simulatorkreis (145) über den ersten Fluidpfad (340) und über den wenigstens einen Bremskreis (10, 20) mit der ersten Zylinder-Kolben-Einrichtung (110, 112, 114, 701, 702) fluidisch koppelbar ist.

3. Elektrohydraulische Kraftfahrzeug-Bremsanlage (1000a) nach Anspruch 1, ferner umfassend wenigstens einen hydraulischen Bremskreis (10, 20) und eine mit dem wenigstens einen hydraulischen Bremskreis (10, 20) fluidisch gekoppelte zweite Zylinder-Kolben-Einrichtung (110', 112', 114'), wobei die erste Zylinder-Kolben-Einrichtung (701, 702) mit der zweiten Zylinder-Kolben-Einrichtung (110', 112', 114') zur Hydraulikdruckerzeugung in dem wenigstens einen Bremskreis (10, 20) fluidisch gekoppelt ist, und/oder,
wobei die erste Ventileinrichtung (330) parallel zur zweiten Ventileinrichtung (130) angeordnet ist.

4. Elektrohydraulische Bremsanlage (1000, 1000a, 1000b) nach einem der vorhergehenden Ansprüche, wobei der Simulatorkreis (145) einen Hydraulikdruckspeicher (144) umfasst, welcher mit einer Bremspedalschnittstelle (115) fluidisch koppelbar ist, und/oder,
wobei sich die zweite Ventileinrichtung (130) unbetätigt in einem geöffneten Zustand befindet.

5. Elektrohydraulische Bremsanlage (1000, 1000a, 1000b) nach einem der Ansprüche 1 oder 2, wobei sich die erste Ventileinrichtung (330) unbetätigt in einem geschlossenen Zustand befindet.

6. Elektrohydraulische Bremsanlage (1000, 1000a, 1000b) nach einem der vorhergehenden Ansprüche, ferner umfassend:
- ein Steuergerät oder ein Steuergerätesystem (200) zum elektrischen Ansteuern der ersten Ventileinrichtung (330) und des elektromechanischen Aktuators (160), wobei das Steuergerät oder Steuergerätesystem (200) dazu ausgebildet ist, die folgenden Schritte durchzuführen:
- Schalten der ersten Ventileinrichtung (330) von einem geschlossenen Zustand in einen geöffneten Zustand, um den Simulatorkreis (145) mit der ersten Zylinder-Kolben-Einrichtung (110, 112, 114, 701, 702) fluidisch zu koppeln; und
Betätigen des elektromechanischen Aktuators (160), um Hydraulikfluid aus der ersten Zylinder-Kolben-Einrichtung (110, 112, 114, 701, 702) über den ersten Fluidpfad (340) in den Simulatorkreis (145) zu verschieben.

7. Elektrohydraulische Bremsanlage (1000, 1000a, 1000b) nach Anspruch 6, wobei das Steuergerät oder das Steuergerätesystem (200) ferner dazu ausgebildet ist, die zweite Ventileinrichtung (130) von einem geöffneten Zustand in einen geschlossenen Zustand zu schalten, bevor Hydraulikfluid in den Simulatorkreis (145) verschoben wird, und optional, wobei das Steuergerät oder ein Steuergerätesystem (200) ferner dazu ausgebildet ist, die zweite Ventileinrichtung (130) nach Verschiebung eines Hydraulikfluidvolumens in den Simulatorkreis (145) wieder zu öffnen, um das im Simulatorkreis (145) aufgestaute Hydraulikfluidvolumen über die zweite Ventileinrichtung (130) an das Hydraulikfluidreservoir (170) abfließen zu lassen.

8. Elektrohydraulische Bremsanlage (1000, 1000a, 1000b) nach Anspruch 6, wobei die zweite Ventileinrichtung (130) während der Betätigung des elektromechanischen Aktuators (160) in einem geöffneten Zustand bleibt.

9. Elektrohydraulische Bremsanlage (1000, 1000a, 1000b) nach Anspruch 2, ferner umfassend wenigstens eine in dem wenigstens einen Bremskreis (10,20) angeordnete dritte Ventileinrichtung (301-304) zur wahlweisen fluidischen Kopplung einer Radbremse (401-404) mit der ersten Zylinder-Kolben-Einrichtung (110, 112, 114, 701, 702) oder mit der zweiten Zylinder-Kolben-Einrichtung (110', 112', 114').

10. Elektrohydraulische Bremsanlage (1000, 1000a, 1000b) nach Anspruch 9 in Kombination mit Anspruch 6, wobei das Steuergerät oder Steuergerätesystem (200) ferner dazu ausgebildet ist, vor Betätigung des elektromechanischen Aktuators (160), die wenigstens eine dritte Ventileinrichtung (301-304) von einem geöffneten Zustand in einen geschlossenen Zustand zu schalten, oder, wobei die wenigstens eine dritte Ventileinrichtung (301- 304) während der Betätigung des elektromechanischen Aktuators (160) in einem geöffneten Zustand bleibt, und das Steuergerät oder Steuergerätesystem (200) dazu ausgebildet ist, die erste Ventileinrichtung (330) nach Betätigen des Aktuators (160) von einem geschlossenen in einen geöffneten Zustand zu schalten.

11. Verfahren zum Überprüfen einer Funktionsfähigkeit einer elektrohydraulischen Kraftfahrzeug-Bremsanlage (1000, 1000a, 1000b), umfassend einen hydraulischen Simulatorkreis (145) zur Erzeugung einer Pedalrückwirkungskraft, eine erste Zylinder-Kolben-Einrichtung (110, 112, 114, 701, 702), einen auf die erste Zylinder-Kolben-Einrichtung (110, 112, 114, 701, 702) einwirkenden elektromechanischen Aktuator (160) zur Hydraulikdruckerzeugung und einen ersten Fluidpfad (340) mit einer darin angeordneten ersten Ventileinrichtung (330) zum wahlweisen fluidischen Koppeln der ersten Zylinder-Kolben-Einrichtung (110, 112, 114, 701, 702) mit dem hydraulischen Simulatorkreis (145), wobei das Verfahren die folgenden Schritte umfasst:
- Schalten der ersten Ventileinrichtung (330) von einem geschlossenen Zustand in einen geöffneten Zustand, um den hydraulischen Simulatorkreis (145) mit der ersten Zylinder-Kolben-Einrichtung (110, 112, 114, 701, 702) fluidisch zu koppeln;
- Betätigen des elektromechanischen Aktuators (160), um Hydraulikfluid aus der ersten Zylinder-Kolben-Einrichtung (110, 112, 114) über den ersten Fluidpfad (340) in den Simulatorkreis (145) zu verschieben;
- Erfassen eines aufgrund des verschobenen Hydraulikfluids herrschenden Hydraulikdrucks; und
- Überprüfen der Funktionsfähigkeit der elektrohydraulischen Kraffahrzeug-Bremsanlage (1000, 1000a, 1000b) auf Basis des erfassten Hydraulikdrucks, **gekennzeichnet durch** die folgenden Schritte:
- Erfassen des während der Betätigung des elektromechanischen Aktuators (160) verschobenen Hydraulikfluidvolumens,
- Vergleichen des erfassten Druckes und des erfassten Hydraulikfluidvolumens mit einer vorgegebenen Volumen-Druck-Charakteristik.

12. Verfahren nach Anspruch 11, wobei der Hydraulikdruck in der ersten Zylinder-Kolben-Einrichtung (110,112,114) und/oder im Simulatorkreis (145) erfasst wird.

13. Verfahren nach einem der Ansprüche 11 bis 12, wobei die Kraftfahrzeug-Bremsanlage (1000, 1000a, 1000b) ferner einen zweiten Fluidpfad (140, 140a, 140b) mit einer darin angeordneten zweiten Ventileinrichtung (130) zum wahlweisen fluidischen Koppeln des Simulatorkreises (145) mit einem Hydraulikfluidreservoir (170) umfasst, wobei der zweiten Ventileinrichtung (130) eine druckgesteuerte Ventileinrichtung (136) nachgeschaltet ist, wobei die zweite Ventileinrichtung (130) bei einer von dem Verfahren gemäß Anspruch 12 separaten Betätigung des Aktuators (160) in einem geöffneten Zustand geschaltet bleibt, um ein aus der ersten Zylinder-Kolben-Einrichtung (110, 112, 114, 701, 702) verschobenes Hydraulikfluid über die erste Ventileinrichtung (330), den Simulatorkreis (145), die zweite Ventileinrichtung (130) und über die druckgesteuerte Ventileinrichtung (136) in das Hydraulikfluidreservoir (170) zu verschieben.

14. Verfahren nach einem der Ansprüche 11 bis 13, wobei die Kraftfahrzeug Bremsanlage (1000, 1000a, 1000b) wenigstens einen Bremskreis (10, 20) und wenigstens eine in dem wenigstens einen Bremskreis (10, 20) angeordnete dritte Ventileinrichtung (301-304) umfasst, ferner umfassend:
Schalten der dritten Ventileinrichtung (301-304) von einem geöffneten Zustand in einen geschlossenen Zustand bevor der Aktuator (160) betätigt wird.

15. Computerprogrammprodukt, umfassend Programmcodemittel zur Durchführung eines Verfahrens nach einem der vorhergehenden Ansprüche 11 bis 14, wenn das Computerprogramm auf einem Prozessor läuft, und optional, wobei das Computerprogrammprodukt auf einem computerlesbaren Datenträger gespeichert ist.

## Claims

1. An electrohydraulic brake system (1000, 1000a, 1000b) for a vehicle, comprising:
- a hydraulic simulator circuit (145) for generation of a pedal response force;
- a first cylinder-piston device (110, 112, 114, 701, 702) and an electromechanical actuator (160) acting on the first cylinder-piston device (110, 112, 114, 701, 702) for generation of a hydraulic pressure in at least one brake circuit (10, 20);
- a first fluid path (340) having a first valve unit (330) arranged therein for a selective fluidic connection of the first cylinder-piston device (110, 112, 114, 701, 702) to the simulator circuit (145); and
- a second fluid path (140) having a second valve unit (130) arranged therein for a selective fluidic connection of the simulator circuit (145) to an unpressurised hydraulic fluid reservoir (170),
- at least a first detection device (2000), which is designed to detect a hydraulic pressure built up by operation of the electromechanical actuator (160),
**characterized in that** the vehicle brake system (1000, 1000a, 1000b) further comprises at least a second detection device (2006), which is designed to detect a hydraulic fluid volume displaced by operation of the electromechanical actuator (160) and a comparison device, which is formed to compare both measured variables detected with a set pressure-volume characteristic.

2. The electrohydraulic brake system (1000, 1000a) for a vehicle according to claim 1, further comprising at least one hydraulic brake circuit (10, 20), wherein the at least one brake circuit (10, 20) is connected fluidically to the first cylinder-piston device (110, 112, 114, 701, 702), and optionally,
wherein the simulator circuit (145) can be connected fluidically to the first cylinder-piston device (110, 112, 114, 701, 702) via the first fluid path (340) and via the at least one brake circuit (10, 20).

3. The electrohydraulic brake system (1000a) for a vehicle according to claim 1, further comprising at least one hydraulic brake circuit (10, 20) and a second cylinder-piston device (110', 112', 114') connected fluidically to the at least one hydraulic brake circuit (10, 20), wherein the first cylinder-piston device (701, 702) is connected fluidically to the second cylinder-piston device (110', 112', 114') for the generation of hydraulic pressure in the at least one brake circuit (10, 20), and/or
wherein the first valve unit (330) is arranged parallel to the second valve unit (130).

4. The electrohydraulic brake system (1000, 1000a, 1000b) according to one of the preceding claims, wherein the simulator circuit (145) comprises a hydraulic pressure accumulator (144), which can be connected fluidically to a brake pedal interface (115), and/or,
wherein the second valve unit (130) when unactuated is in an open state.

5. The electrohydraulic brake system (1000, 1000a, 1000b) according to one of the claims 1 or 2, wherein the first valve unit (330) when unactuated is in a closed state.

6. The electrohydraulic brake system (1000, 1000a, 1000b) according to one of the preceding claims, further comprising:
- a control apparatus or a control apparatus system (200) for the electrical activation of the first valve unit (330) and of the electromechanical actuator (160), wherein the control apparatus or control apparatus system (200) is formed to execute the following steps:
- switching the first valve unit (330) from a closed state to an open state, in order to connect the simulator circuit (145) fluidically to the first cylinder-piston device (110, 112, 114, 701, 702); and
- operating the electromechanical actuator (160) to displace hydraulic fluid from the first cylinder-piston device (110, 112, 114, 701, 702) via the first fluid path (340) into the simulator circuit (145).

7. The electrohydraulic brake system (1000, 1000a, 1000b) according to claim 6, wherein the control apparatus or control apparatus system (200) is further formed to switch the second valve unit (130) from an open state to a closed state before hydraulic fluid is displaced into the simulator circuit (145), and optionally,
wherein the control apparatus or control apparatus system (200) is further formed to open the second valve unit (130) again following displacement of a volume of hydraulic fluid into the simulator circuit (145), in order to let the volume of hydraulic fluid dammed up in the simulator circuit (145) flow away to the hydraulic fluid reservoir (170) via the second valve unit (130).

8. The electrohydraulic brake system (1000, 1000a, 1000b) according to claim 6, wherein the second valve unit (130) remains in an open state during the operation of the electromechanical actuator (160).

9. The electrohydraulic brake system (1000, 1000a, 1000b) according to claim 2, further comprising at least a third valve unit (301-304) arranged in the at least one brake circuit (10, 20) for the selective fluidic connection of a wheel brake (401-404) to the first cylinder-piston device (110, 112, 114, 701, 702) or to the second cylinder-piston device (110', 112', 114').

10. The electrohydraulic brake system (1000, 1000a, 1000b) according to claim 9 in combination with claim 6, wherein the control apparatus or control apparatus system (200) is further formed to switch the at least one third valve unit (301-304) from an open state to a closed state before operation of the electromechanical actuator (160), or
wherein the at least one third valve unit (301-304) remains open during operation of the electromechanical actuator (160), and the control apparatus or control apparatus system (200) is formed to switch the first valve unit (330) from a closed to an open state following operation of the actuator (160).

11. A method for checking a functionality of an electrohydraulic brake system (1000, 1000a, 1000b) for a vehicle, comprising a hydraulic simulator circuit (145) for generation of a pedal response force, a first cylinder-piston device (110, 112, 114, 701, 702), an electromechanical actuator (160) acting on the first cylinder-piston device (110, 112, 114, 701, 702) for generation of a hydraulic pressure and a first fluid path (340) having a first valve unit (330) arranged therein for a selective fluidic connection of the first cylinder-piston device (110, 112, 114, 701, 702) to the hydraulic simulator circuit (145), wherein the method comprises the following steps:
- switching the first valve unit (330) from a closed state to an open state, in order to connect the hydraulic simulator circuit (145) fluidically to the first cylinder-piston device (110, 112, 114, 701, 702);
- operating the electromechanical actuator (160) to displace hydraulic fluid from the first cylinder-piston device (110, 112, 114) via the first fluid path (340) into the simulator circuit (145);
- detecting a hydraulic pressure prevailing on account of the displaced hydraulic fluid; and
- checking the functionality of the electrohydraulic vehicle brake system (1000, 1000a, 1000b) on the basis of the hydraulic pressure detected, **characterized by** the following steps:
- detecting the volume of hydraulic fluid displaced during operation of the electromechanical actuator (160),
- comparing the pressure detected and the volume of hydraulic fluid detected with a set volume-pressure characteristic.

12. The method according to claim 11, wherein the hydraulic pressure in the first cylinder-piston device (110, 112, 114) and/or in the simulator circuit (145) is detected.

13. The method according to one of claims 11 to 12, wherein the vehicle brake system (1000, 1000a, 1000b) further comprises a second fluid path (140, 140a, 140b) having a second valve unit (130) arranged therein for the selective fluidic connection of the simulator circuit (145) to a hydraulic fluid reservoir (170), wherein a pressure-controlled valve unit (136) is connected downstream of the second valve unit (130), wherein the second valve unit (130) remains switched to an open state on operation of the actuator (160), which is separate from the method according to claim 12, in order to displace a hydraulic fluid displaced from the first cylinder-piston device (110, 112, 114, 701, 702) via the first valve unit (330), the simulator circuit (145), the second valve unit (130) and via the pressure-controlled valve unit (136) into the hydraulic fluid reservoir (170).

14. The method according to one of claims 11 to 13, wherein the vehicle brake system (1000, 1000a, 1000b) comprises at least one brake circuit (10, 20) and at least a third valve unit (301-304) arranged in the at least one brake circuit (10, 20), further comprising:
switching of the third valve unit (301-304) from an open state to a closed state before the actuator (160) is operated.

15. A computer program product, comprising program code means for executing a method according to one of the preceding claims 11 to 14 when the computer program runs on a processing unit, and optionally,
wherein the computer program product is stored on a computer-readable data carrier.

## Revendications

1. Système de freinage électrohydraulique pour véhicule automobile (1000, 1000a, 1000b) comprenant :
- un circuit hydraulique simulateur (145) destiné à produire une force de réaction de la pédale ;
- un premier dispositif à cylindre et piston (110, 112, 114, 701, 702) et un actionneur électromécanique (160) agissant sur le premier dispositif à cylindre et piston (110, 112, 114, 701, 702) afin de générer une pression hydraulique dans au moins un circuit de freinage (10, 20) ;
- un premier trajet de fluide (340) sur lequel est placé un premier dispositif à valve (330) destiné à établir sélectivement une liaison fluidique entre le premier dispositif à cylindre et piston (110, 112, 114, 701, 702) et le circuit simulateur (145) ; et
- un deuxième trajet de fluide (140) sur lequel est placé un deuxième dispositif à valve (130) destiné à établir sélectivement une liaison fluidique entre le circuit simulateur (145) et un réservoir de fluide hydraulique sans pression (170),
- au moins un premier dispositif à capteur (2000) conçu pour mesurer une pression hydraulique générée par l'actionnement de l'actionneur électromécanique (160),
**caractérisé en ce que** le système de freinage pour véhicule automobile (1000, 1000a, 1000b) comprend en outre au moins un deuxième dispositif à capteur (2006) conçu pour mesurer un volume de fluide hydraulique déplacé par l'actionnement de l'actionneur électromécanique (160) et un dispositif de comparaison conçu pour comparer les deux grandeurs de mesure relevées à une courbe caractéristique pression-volume prédéfinie.

2. Système de freinage électrohydraulique pour véhicule automobile (1000, 1000a) selon la revendication 1, comprenant en outre au moins un circuit de freinage hydraulique (10, 20), dans lequel ledit au moins un circuit de freinage (10, 20) est relié par une liaison fluidique au premier dispositif à cylindre et piston (110, 112, 114, 701, 702), et, en option, dans lequel le circuit simulateur (145) peut être relié par une liaison fluidique au premier dispositif à cylindre et piston (110, 112, 114, 701, 702) par le biais du premier trajet de fluide (340) et dudit au moins un circuit de freinage (10, 20).

3. Système de freinage électrohydraulique pour véhicule automobile (1000a) selon la revendication 1, comprenant en outre au moins un circuit de freinage hydraulique (10, 20) et un deuxième dispositif à piston et cylindre (110', 112', 114') relié par une liaison fluidique audit au moins un circuit de freinage hydraulique (10, 20), dans lequel le premier dispositif à piston et cylindre (701, 702) est relié par une liaison fluidique au deuxième dispositif à piston et cylindre (110', 112', 114') afin de générer une pression hydraulique dans ledit au moins un circuit de freinage (10, 20), et/ou
dans lequel le premier dispositif à valve (330) est monté en parallèle avec le deuxième dispositif à valve (130).

4. Système de freinage électrohydraulique (1000, 1000a, 1000b) selon l'une des revendications précédentes, dans lequel le circuit simulateur (145) comprend un accumulateur hydraulique (144) pouvant être relié par une liaison fluidique à une interface de pédale de frein (115), et/ou
dans lequel le deuxième dispositif à valve (130) non actionné est en position ouverte.

5. Système de freinage électrohydraulique (1000, 1000a, 1000b) selon la revendication 1 ou 2, dans lequel le premier dispositif à valve (330) non actionné est en position fermée.

6. Système de freinage électrohydraulique (1000, 1000a, 1000b) selon l'une des revendications précédentes, comprenant en outre :
- un appareil de commande ou un système d'appareils de commande (200) pour actionner électriquement le premier dispositif à valve (330) et l'actionneur électromécanique (160), l'appareil de commande ou le système d'appareils de commande (200) étant conçu pour exécuter les étapes suivantes :
- commuter le premier dispositif à valve (330) d'une position fermée à une position ouverte afin d'établir une liaison fluidique entre le circuit simulateur (145) et le premier dispositif à cylindre et piston (110, 112, 114, 701, 702) ; et
- actionner l'actionneur électromécanique (160) pour déplacer du fluide hydraulique du premier dispositif à cylindre et piston (110, 112, 114, 701, 702) dans le circuit simulateur (145) via le premier trajet de fluide (340).

7. Système de freinage électrohydraulique (1000, 1000a, 1000b) selon la revendication 6, dans lequel l'appareil de commande ou le système d'appareils de commande (200) est en outre conçu pour commuter le deuxième dispositif à valve (130) d'une position ouverte à une position fermée avant que du fluide hydraulique ne soit déplacé dans le circuit simulateur (145), et, en option, dans lequel l'appareil de commande ou un système d'appareils de commande (200) est en outre conçu pour ouvrir à nouveau le deuxième dispositif à valve (130) après qu'un volume de fluide hydraulique a été déplacé dans le circuit simulateur (145), afin de laisser le volume de fluide hydraulique accumulé dans le circuit simulateur (145) s'évacuer dans le réservoir de fluide hydraulique (170) via le deuxième dispositif à valve (130).

8. Système de freinage électrohydraulique (1000, 1000a, 1000b) selon la revendication 6, dans lequel le deuxième dispositif à valve (130) reste en position ouverte pendant l'actionnement de l'actionneur électromécanique (160).

9. Système de freinage électrohydraulique (1000, 1000a, 1000b) selon la revendication 2, comprenant en outre au moins un troisième dispositif à valve (301-304) disposé dans ledit au moins un circuit de freinage (10, 20) pour établir sélectivement une liaison fluidique entre un frein de roue (401-404) et le premier dispositif à cylindre et piston (110, 112, 114, 701, 702) ou le deuxième dispositif à cylindre et piston (110', 112', 114').

10. Système de freinage électrohydraulique (1000, 1000a, 1000b) selon la revendication 9 en combinaison avec la revendication 6, dans lequel l'appareil de commande ou un système d'appareils de commande (200) est en outre conçu pour commuter ledit au moins troisième dispositif à valve (301-304) d'une position ouverte à une position fermée avant l'actionnement de l'actionneur électromécanique (160), ou dans lequel ledit au moins troisième dispositif à valve (301-304) reste en position ouverte pendant l'actionnement de l'actionneur électromécanique (160), et l'appareil de commande ou le système d'appareils de commande (200) est conçu pour commuter le premier dispositif à valve (330) d'une position fermée à une position ouverte après actionnement de l'actionneur (160).

11. Procédé de vérification de l'aptitude fonctionnelle d'un système de freinage électrohydraulique pour véhicule automobile (1000, 1000a, 1000b), comprenant un circuit hydraulique simulateur (145) pour produire une force de réaction de la pédale, un premier dispositif à cylindre et piston (110, 112, 114, 701, 702), un actionneur électromécanique (160) agissant sur le premier dispositif à cylindre et piston (110, 112, 114, 701, 702) afin de générer une pression hydraulique, et un premier trajet de fluide (340) sur lequel est placé un premier dispositif à valve (330) destiné à établir sélectivement une liaison fluidique entre le premier dispositif à cylindre et piston (110, 112, 114, 701, 702) et le circuit hydraulique simulateur (145), le procédé comprenant les étapes suivantes :
- commutation du premier dispositif à valve (330) d'une position fermée à une position ouverte afin d'établir une liaison fluidique entre le circuit hydraulique simulateur (145) et le premier dispositif à cylindre et piston (110, 112, 114, 701, 702) ;
- actionnement de l'actionneur électromécanique (160) pour déplacer du fluide hydraulique du premier dispositif à cylindre et piston (110, 112, 114) dans le circuit simulateur (145) via le premier trajet de fluide (340) ;
- mesure de la pression hydraulique générée du fait du déplacement du fluide hydraulique ; et
- vérification de l'aptitude fonctionnelle du système de freinage électrohydraulique pour véhicule automobile (1000, 1000a, 1000b) sur la base de la pression hydraulique mesurée, **caractérisé par** les étapes suivantes :
- mesure du volume de fluide hydraulique déplacé pendant l'actionnement de l'actionneur électromécanique (160),
- comparaison de la pression mesurée et du volume de fluide hydraulique mesuré avec une courbe caractéristique volume-pression prédéfinie.

12. Procédé selon la revendication 11, dans lequel la pression hydraulique est mesurée dans le premier dispositif à cylindre et piston (110, 112, 114) et/ou dans le circuit simulateur (145).

13. Procédé selon la revendication 11 ou 12, dans lequel le système de freinage pour véhicule automobile (1000, 1000a, 1000b) comprend en outre un deuxième trajet de fluide (140, 140a, 140b) sur lequel est disposé un deuxième dispositif à valve (130) destiné à établir sélectivement une liaison fluidique entre le circuit simulateur (145) et un réservoir de fluide hydraulique (170), dans lequel un dispositif à valve commandé par pression (136) est monté en aval du deuxième dispositif à valve (130), dans lequel le deuxième dispositif à valve (130) reste en position ouverte lors d'un actionnement de l'actionneur (160) en dehors du procédé selon la revendication 12, afin de déplacer un fluide hydraulique sortant du premier dispositif à cylindre et piston (110, 112, 114, 701, 702) dans le réservoir de fluide hydraulique (170) via le premier dispositif à valve (330), le circuit simulateur (145), le deuxième dispositif à valve (130) et le dispositif à valve commandé par pression (136).

14. Procédé selon l'une des revendications 11 à 13, dans lequel le système de freinage pour véhicule automobile (1000, 1000a, 1000b) comprend au moins un circuit de freinage (10, 20) et au moins un troisième dispositif à valve (301-304) placé dans au moins un circuit de freinage (10, 20), consistant en outre à :
- commuter le troisième dispositif à valve (301-304) d'une position ouverte à une position fermée avant que l'actionneur (160) ne soit actionné.

15. Programme informatique comprenant un code de programme pour mettre en oeuvre un procédé selon l'une des revendications précédentes 11 à 14 lorsque le programme informatique est exécuté sur un processeur, et, en option, dans lequel le programme informatique est enregistré sur un support de données lisible par ordinateur.
